(19) Europäisches Patentamt
European Patent Office
Office européen des brevets

(11) EP 3 551 722 B1

(12) # EUROPEAN PATENT SPECIFICATION

(45) Date of publication and mention of the grant of the patent:
**07.10.2020 Bulletin 2020/41**

(21) Application number: **17821502.6**

(22) Date of filing: **06.12.2017**

(51) Int Cl.:
***C09K 19/30*** (2006.01) ***C09K 19/04*** (2006.01)
***C09K 19/12*** (2006.01)

(86) International application number:
**PCT/EP2017/081630**

(87) International publication number:
**WO 2018/104366 (14.06.2018 Gazette 2018/24)**

(54) **LIQUID CRYSTALLINE MEDIUM**

FLÜSSIGKRISTALLINES MEDIUM

MILIEU CRISTALLIN LIQUIDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.12.2016 EP 16203219**

(43) Date of publication of application:
**16.10.2019 Bulletin 2019/42**

(73) Proprietor: **Merck Patent GmbH**
**64293 Darmstadt (DE)**

(72) Inventors:
- **WITTEK, Michael**
**64390 Erzhausen (DE)**
- **REIFFENRATH, Volker**
**64380 Rossdorf (DE)**

(56) References cited:
**CN-B- 104 152 153**
**DE-A1-102011 118 210**
**US-B1- 7 306 831**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 551 722 B1

## Description

The present invention relates to liquid crystalline media and to liquid crystal displays comprising these media, especially to displays addressed by an active matrix and in particular to displays of the Twisted Nematic, the In Plane Switching (IPS) and Fringe Field Switching (FFS) type.

Liquid Crystal Displays (LCDs) are widely used to display information. LCDs are used for direct view displays, as well as for projection type displays. Electro-optical modes employed are e.g. the twisted nematic (TN)-, the super twisted nematic (STN)-, the optically compensated bend (OCB)- and the electrically controlled birefringence (ECB)-mode with their various modifications, and others. All these modes use an electrical field, which is substantially perpendicular to the substrates and to the liquid crystal layer. Besides these modes there are also electro-optical modes employing an electrical field substantially parallel to the substrates, respectively the liquid crystal layer, like e.g. the In-Plane Switching mode (as disclosed e.g. in DE 40 00 451 and EP 0 588 568). Especially this electro-optical mode is used for LCDs for modern desktop monitors and TV applications. The liquid crystals according to the present invention are preferably used in this type of displays.

Furthermore, so-called FFS ("fringe-field switching") displays have been reported (see, inter alia, S.H. Jung et al., Jpn. J. Appl. Phys., Volume 43, No. 3, 2004, 1028), which contain two electrodes on the same substrate, one of which is structured in a comb-shaped manner and the other is unstructured. A strong, so-called "fringe field" is thereby generated, i.e. a strong electric field close to the edge of the electrodes, and, throughout the cell, an electric field which has both a strong vertical component and also a strong horizontal component. FFS displays have a low viewing-angle dependence of the contrast. FFS displays usually contain an LC medium with positive dielectric anisotropy, and an alignment layer, usually of polyimide, which provides planar alignment to the molecules of the LC medium.

For these displays new liquid crystalline media with improved properties are required. Especially the response times have to be improved for many types of applications. Thus, liquid crystalline media with lower viscosities ($\eta$), especially with lower rotational viscosities ($\gamma_1$) are required. Besides these parameters, the media have to exhibit a suitably wide range of the nematic phase, an appropriate birefringence ($\Delta n$) and dielectric anisotropy ($\Delta\varepsilon$) where the latter should be high enough to allow a reasonably low operation voltage. Another requirement of utmost importance is the existence of a nematic phase of the media over a broad temperature range to allow for applications at elevated temperatures well above ambient temperature, for example at 70 °C, as well as at low temperatures, for example at -30°C. Especially upon cooling, the formation of smectic phases or crystallisation is undesired and may even lead to the destruction of a display device. The existence of a nematic phase without formation of smectic phases or crystallisation at low temperatures and over a period of time sufficient for the operation of a device is referred to as low temperature stability (LTS).

The displays according to the present invention are preferably addressed by an active matrix (active matrix LCDs, short AMDs), preferably by a matrix of thin film transistors (TFTs). However, the inventive liquid crystals can also beneficially be used in displays with other known addressing means.

There are various different display modes using composite systems of liquid crystal materials of low molecular weight together with polymeric materials. These are e.g. polymer dispersed liquid crystal (PDLC)-, nematic curvi-linearly aligned phase (NCAP)- and polymer network (PN)-systems, as disclosed for example in WO 91/05 029 or axially symmetric microdomain (ASM) systems and others. In contrast to these, the modes especially preferred according to the instant invention are using the liquid crystal medium as such, oriented on surfaces. These surfaces typically are pretreated to achieve uniform alignment of the liquid crystal material The display modes according to the instant invention preferably use an electrical field substantially parallel to the composite layer.

Liquid crystal compositions suitable for LCDs and especially for IPS displays are known e. g. from JP 07-181 439 (A), EP 0 667 555, EP 0 673 986, DE 195 09 410, DE 195 28 106, DE 195 28 107, WO 96/23 851 and WO 96/28 521. These compositions, however, do have significant drawbacks. Most of them, amongst other deficiencies, lead to unfavourably long response times, have too low values of the resistivity and/or require operation voltages, which are too high.

Thus, there is a significant need for liquid crystalline media with suitable properties for practical applications such as a wide nematic phase range, appropriate optical anisotropy $\Delta n$, according to the display mode used, a high $\Delta\varepsilon$, low viscosities and high LTS.

Surprisingly, it has now been found that liquid crystalline media with a suitably high $\Delta\varepsilon$, a suitable phase range and $\Delta n$ and high LTS can be realized which do not exhibit the drawbacks of the materials of the prior art or at least do exhibit them to a significantly lesser degree by using liquid crystalline media comprising one or more compounds of formula I:

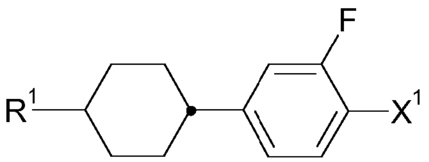

I

wherein

$R^1$ denotes alkenyl having 2 to 7 C atoms,
$X^1$ denotes methyl,

and

b) one or more compounds selected from the group of compounds of the formulae II and III:

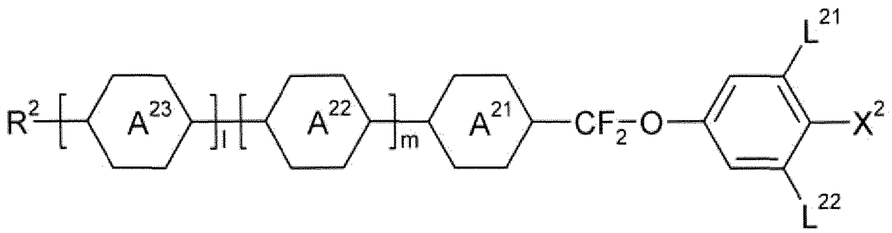

II

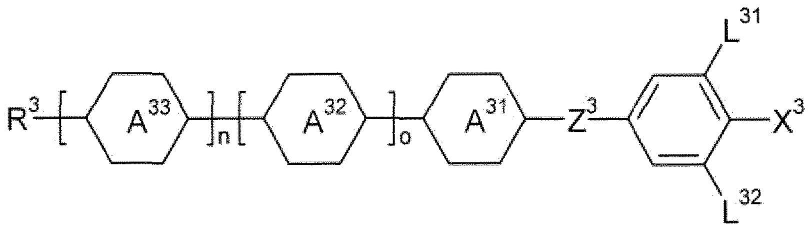

III

wherein

$R^2$ and $R^3$ independently of each other, denote alkyl, alkoxy, fluorinated alkyl or fluorinated alkoxy with 1 to 7 C-atoms, alkenyl, alkenyloxy, alkoxyalkyl or fluorinated alkenyl with 2 to 7 C-atoms, preferably alkyl or alkenyl,

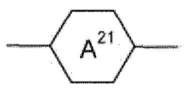 to 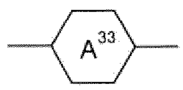

are independently of each other

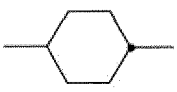, 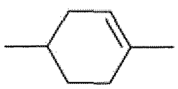, 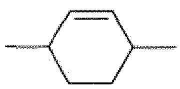,

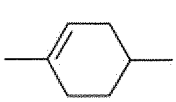, 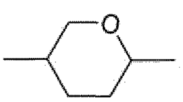, 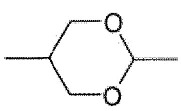,

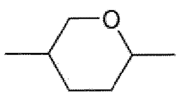 , 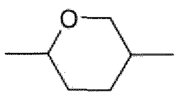 , 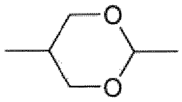 ,

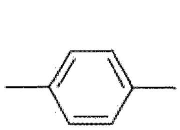 , 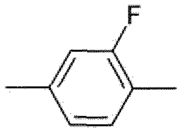 , 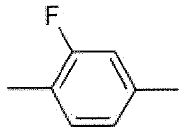 ,

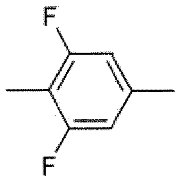 , or 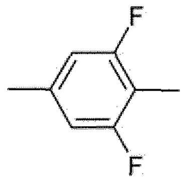 ,

preferably

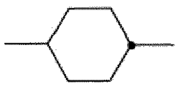 , 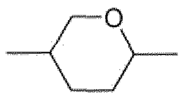 , 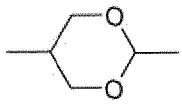 ,

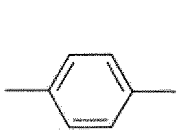 , 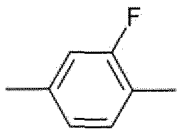 , 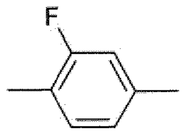 ,

or

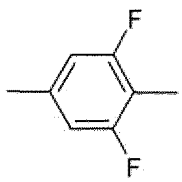 ,

| | |
|---|---|
| $L^{21}$, $L^{22}$, $L^{31}$ and $L^{32}$ | independently of each other, denote H or F, preferably F |
| $X^2$ and $X^3$ | independently of each other, denote halogen, halogenated alkyl or alkoxy with 1 to 3 C-atoms or halogenated alkenyl or alkenyloxy with 2 or 3 C-atoms, preferably F, Cl, $-OCF_3$ or $-CF_3$, most preferably F, Cl or $-OCF_3$, |
| $Z^3$ | denotes $-CH_2CH_2-$, $-CF_2CF_2-$, -COO-, *trans*- -CH=CH-, *trans*-CF=CF-, $-CH_2O-$ or a single bond, preferably $-CH_2CH_2-$, -COO-, *trans*- -CH=CH- or a single bond and most preferably -COO-, *trans*- -CH=CH- or a single bond, and |
| l, m, n and o | are, independently of each other, 0 or 1, |

and where the compounds of formula I are excluded from the compounds of formula III.

The media according to the invention are particularly useful in applications where good LTS is necessary.

The compounds of formula I are known from prior art and proposed for the use in LC media e.g. in US 7,306,831 B1. A structurally related compound with a terminal fluorine substituent is shown in CN 104152153 B.

Preferred compounds of formula I are selected from the compounds of the formula I-3:

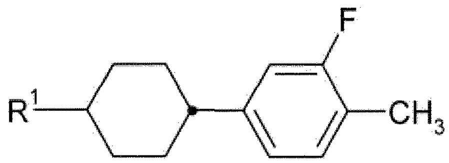

I-3

where $R^1$ denotes $CH_2$=$CH_2$-, *trans*-$CH_3$-CH=$CH_2$- or *trans*-$C_2H_5$-CH=$CH_2$.

In a preferred embodiment of the present invention the medium comprises one or more compounds of formula IV:

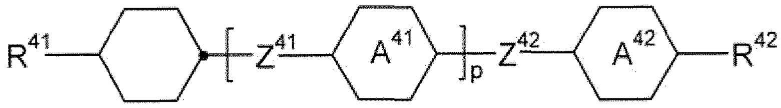

IV

wherein

$R^{41}$ and $R^{42}$ independently of each other have the meaning given for $R^2$ under formula II above, preferably $R^{41}$ is alkyl and $R^{42}$ is alkyl or alkoxy or $R^{41}$ is alkenyl and $R^{42}$ is alkyl,

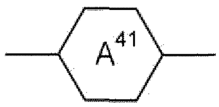

and

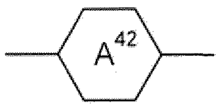

,

independently of each other, and in case

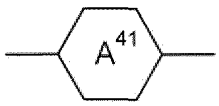

is present twice, also these, independently of each other, are

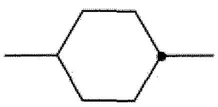

,

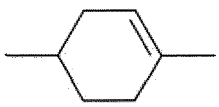

,

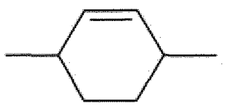

,

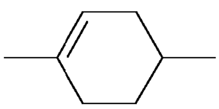

,

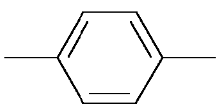

,

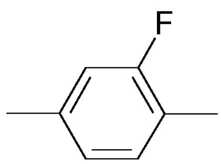

,

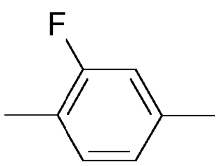

,

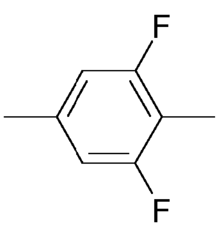

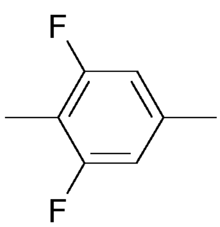

or

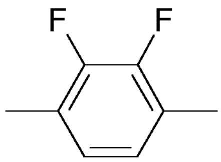

,

preferably at least one of

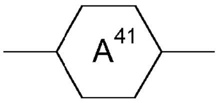

and

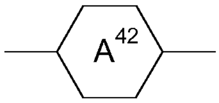

,

is,

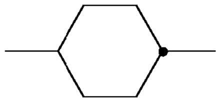

,

$Z^{41}$, $Z^{42}$ independently of each other, and in case $Z^{41}$ is present twice, also these independently of each other, denote $-CH_2CH_2-$, -COO-, *trans*- -CH=CH-, *trans*- -CF=CF-, $-CH_2O-$, $-CF_2O-$, -C≡C- or a single bond, preferably at least one of them is a single bond, and

p is 0, 1 or 2, preferably 0 or 1,

and where compounds of formula I are excluded.

The compounds of formula II are preferably selected from the group of compounds of formulae II-1 to II-3

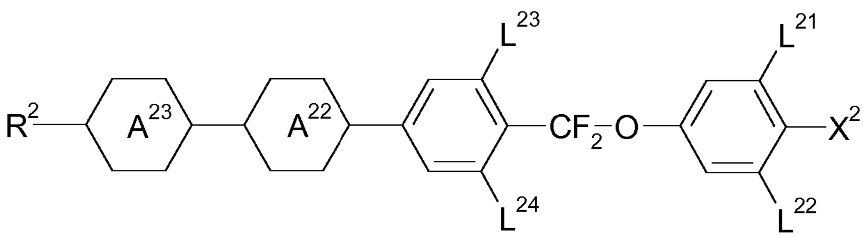

II-1

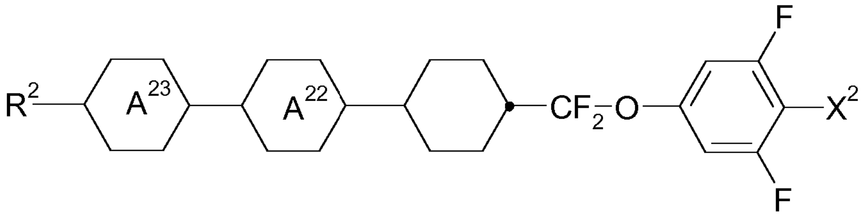

II-2

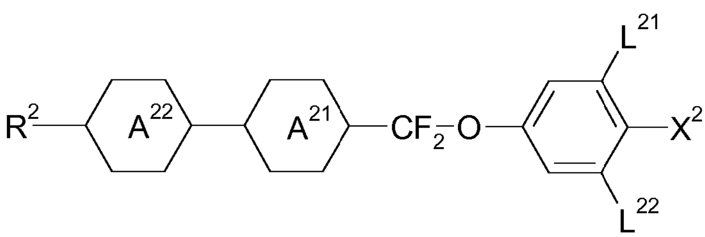

II-3

wherein the occurring groups have the respective meanings given under formula II above and in formula II-1 the group $L^{23}$ and $L^{24}$ denote, independently of each other, H or F and in formula II-2 preferably

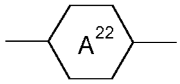

and

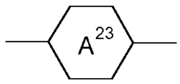

denote, independently of one another

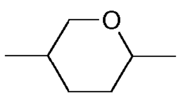

or

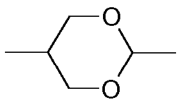

.

In formulae II-1 to II-3, $L^{21}$ and $L^{22}$ or $L^{23}$ and $L^{24}$ are preferably both F.

In another preferred embodiment, in formulae II-1 and II-2, all of $L^{21}$, $L^{22}$, $L^{23}$ and $L^{24}$ denote F.

The compounds of formula II-1 are preferably selected from the group of compounds of formulae II-1a to II-1g, particularly preferably from the group of compounds of formulae II-1a, II-1f and II-1g

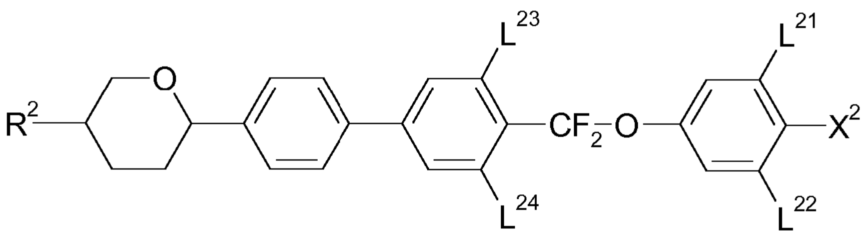

II-1a

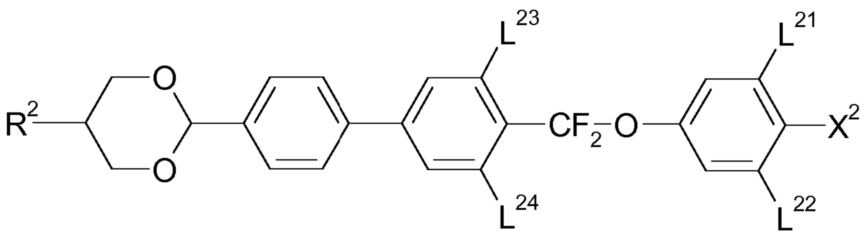

II-1b

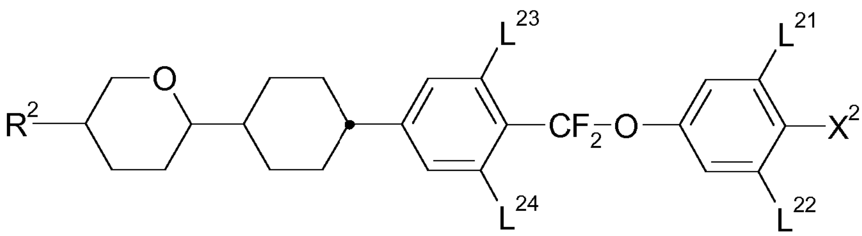

II-1c

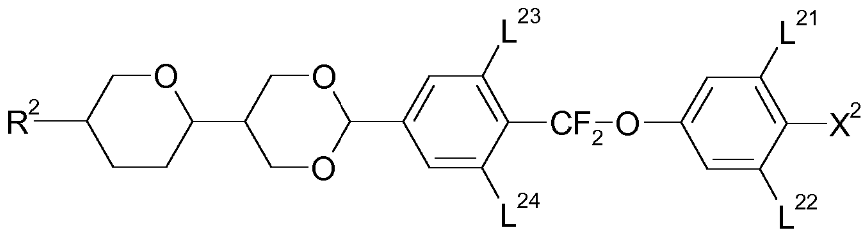

II-1d

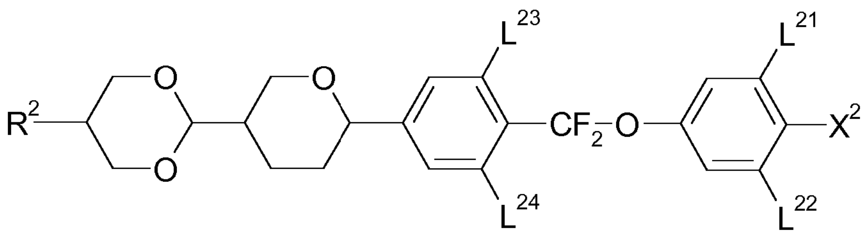

II-1e

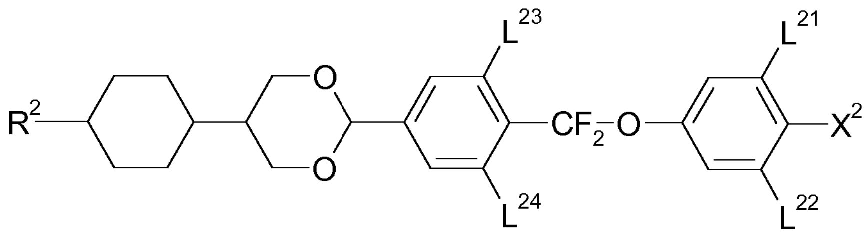

II-1f

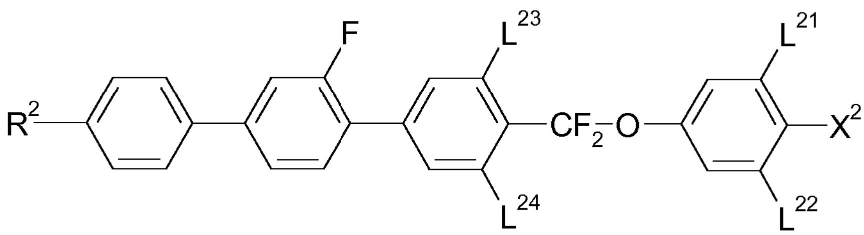

II-1g

wherein the occurring groups have the respective meanings given above.

In a preferred embodiment of the present invention the medium comprises compounds selected from the group of compounds of formulae II-1a to II-1 g wherein $L^{21}$ and $L^{22}$ or $L^{23}$ and $L^{24}$ are both F.

In another preferred embodiment the medium comprises compounds selected from the group of compounds of formulae II-1a to II-1g, wherein $L^{21}$, $L^{22}$, $L^{23}$ and $L^{24}$ all are F.

Especially preferred compounds of formula II-1 are

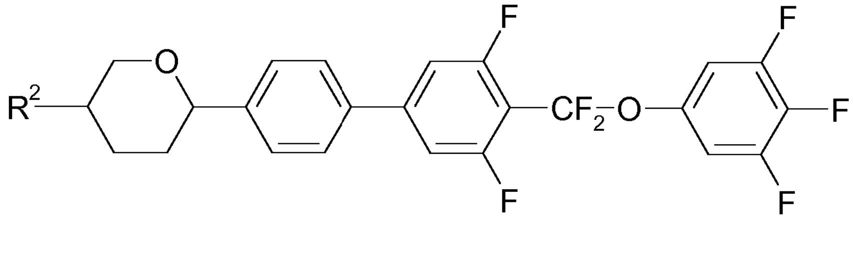

II-1a-1

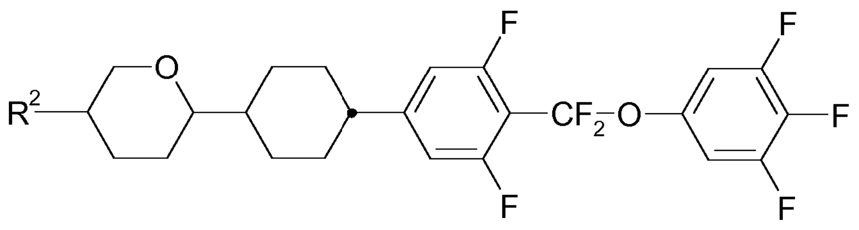

II-1c-1

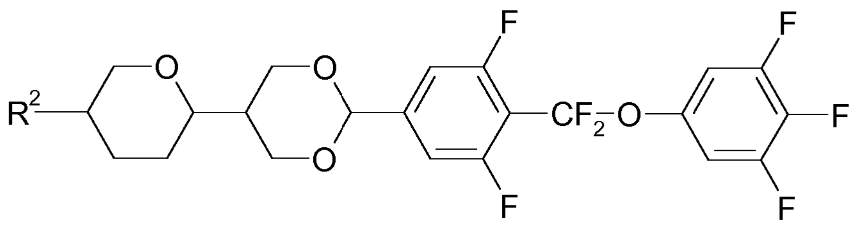

II-1d-1

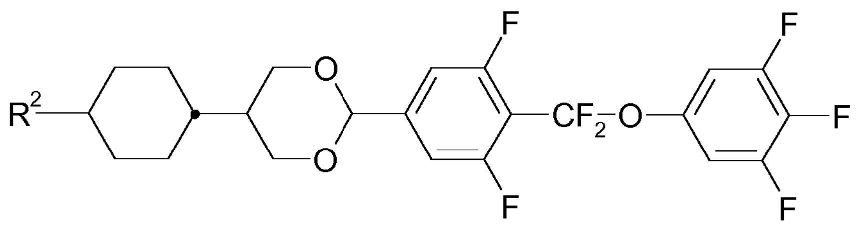

II-1f-1

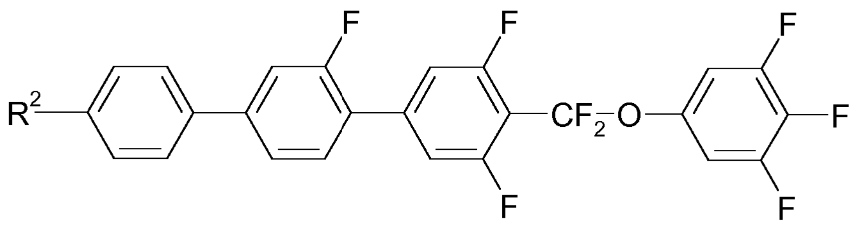

II-1g-1

wherein the $R^2$ has the meaning given above.

Preferably the compounds of formula II-2 are selected from the group of compounds of formulae II-2a to II-2c

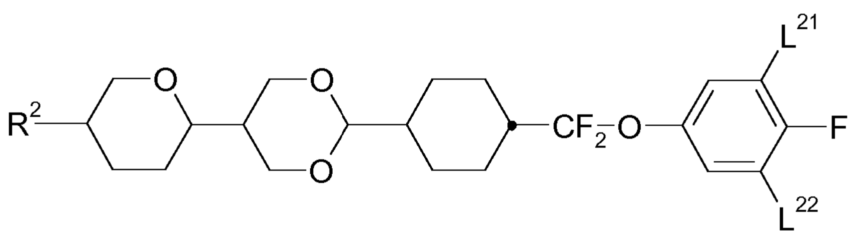

II-2a

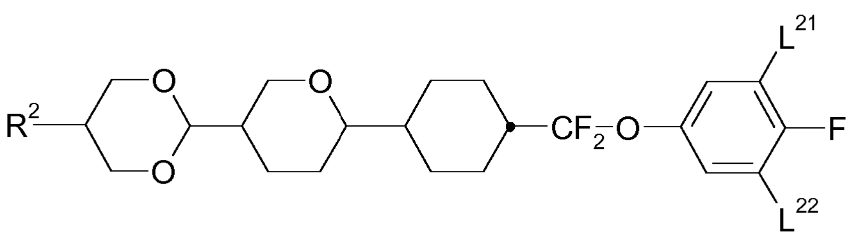

II-2b

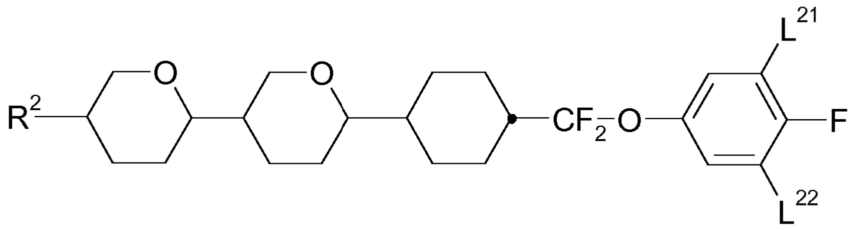

II-2c

wherein the occurring groups have the respective meanings given above and preferably $L^{21}$ and $L^{22}$ are both F.

Preferably the compounds of formula II-3 are selected from the group of compounds of formulae II-3a to II-3e, particularly preferably from the group of compounds of formulae II-3a and II-3d

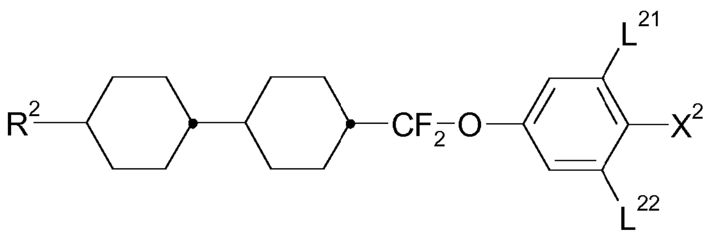

II-3a

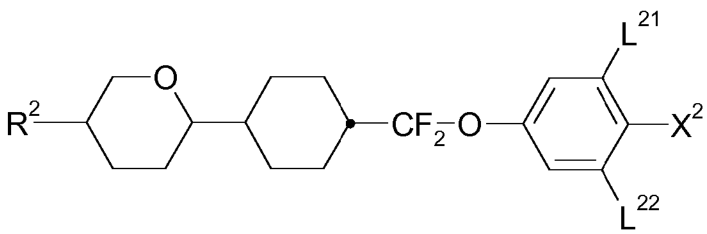

II-3b

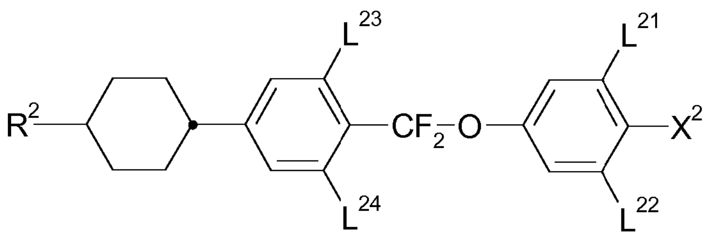

II-3c

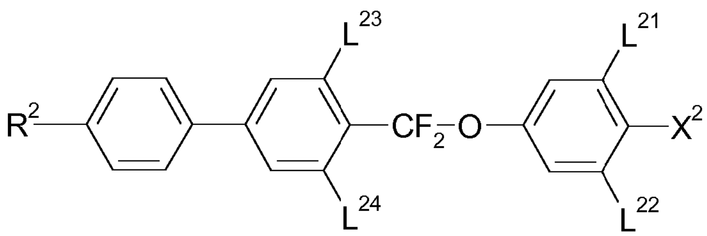

II-3d

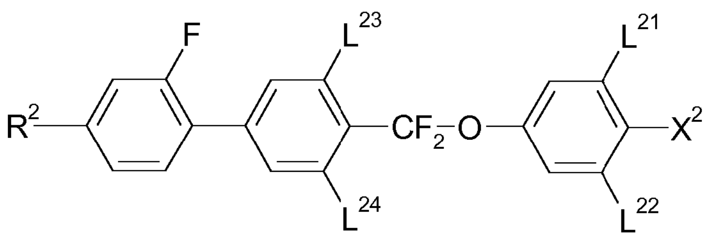

II-3e

wherein the occurring groups have the respective meanings given above and preferably

$L^{21}$ and $L^{22}$ are both F and $L^{23}$ and $L^{24}$ are both H or
$L^{21}$, $L^{22}$, $L^{23}$ and $L^{24}$ are all F.

Especially preferred compounds of formula II-3 are

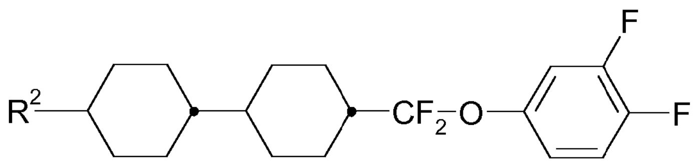

II-3a-1

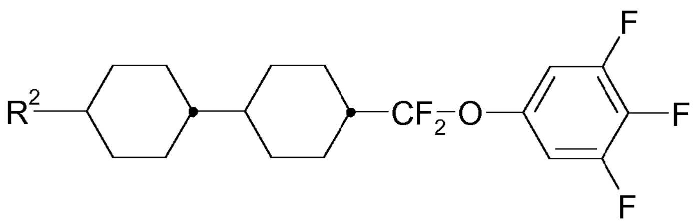

II-3a-2

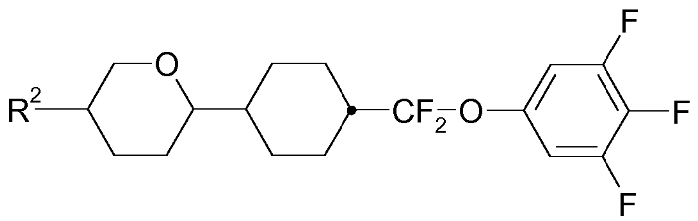

II-3b-1

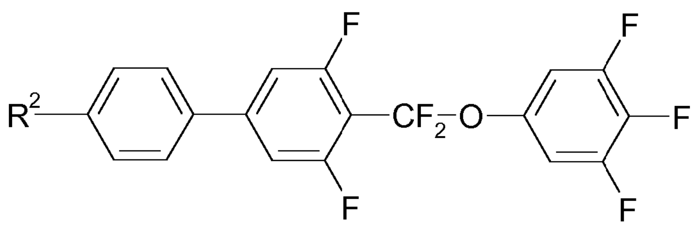

II-3d-1

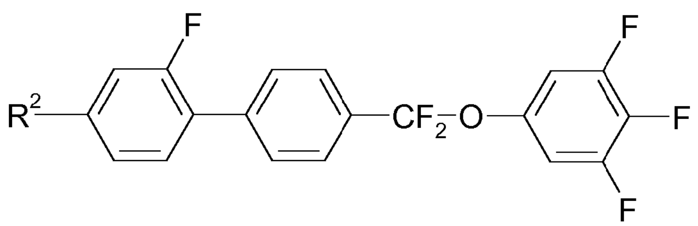

II-3e-1

wherein the $R^2$ has the meaning given above.

In another preferred embodiment of the present invention compounds of formula III are selected from the group of formulae III-1 and III-2

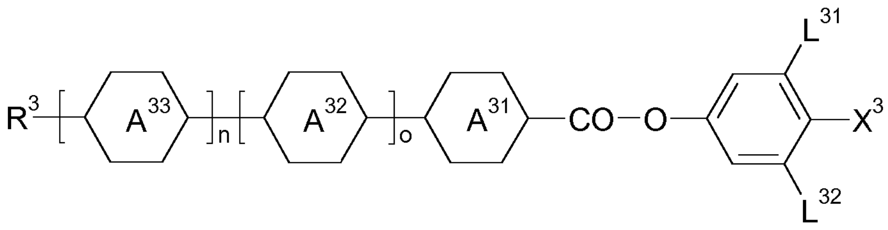

III-1

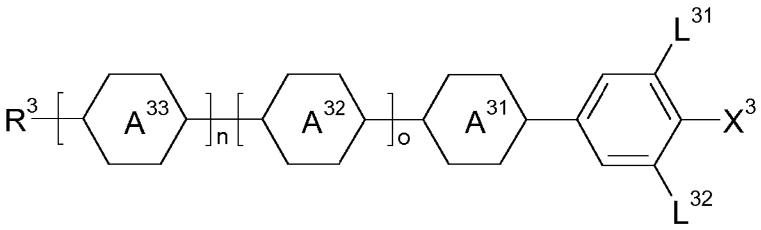

III-2

wherein the occurring groups have the respective meanings given under formula III above and where the compounds of formula I are excluded from formula III-2.

Preferably the compounds of formula III-1 are selected from the group of compounds of formulae III-1 a and III-1 b

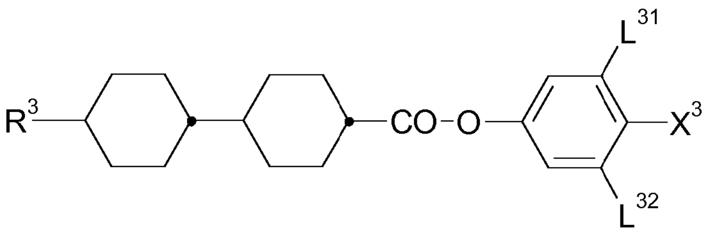

III-1a

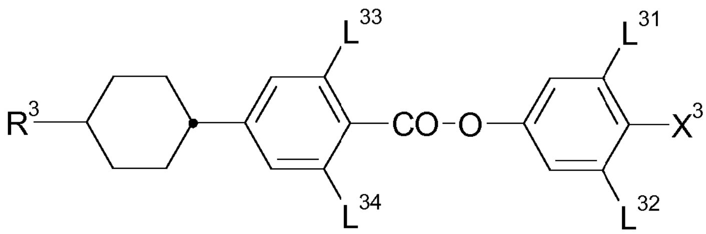

III-1b

wherein the occurring groups have the respective meanings given above and $L^{33}$ and $L^{34}$, independently of one another, denote H or F.

Preferably the compounds of formula III-2 are selected from the group of compounds of formulae III-2a to III-2i

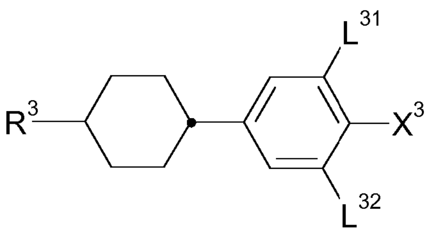

III-2a

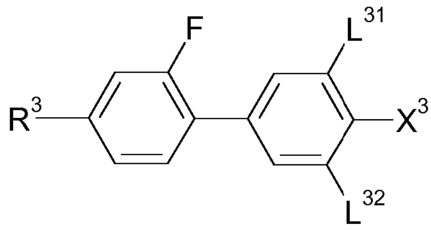

III-2b

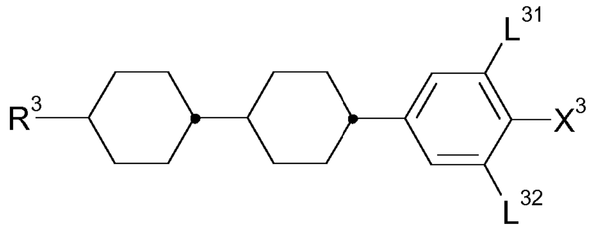

III-2c

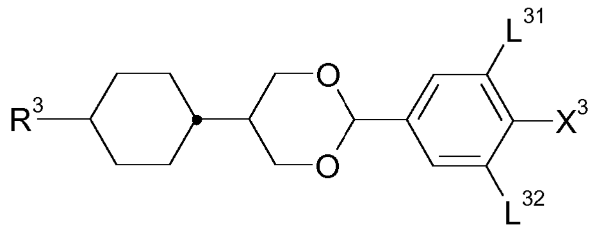

III-2d

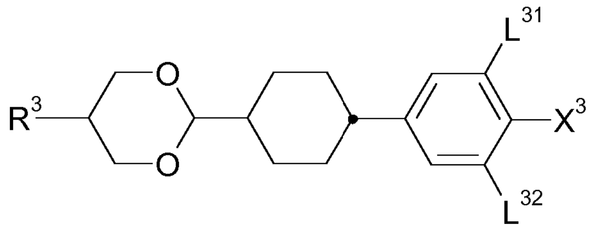

III-2e

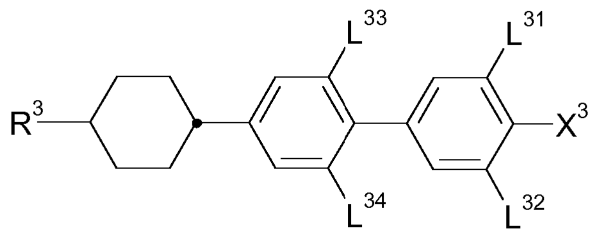

III-2f

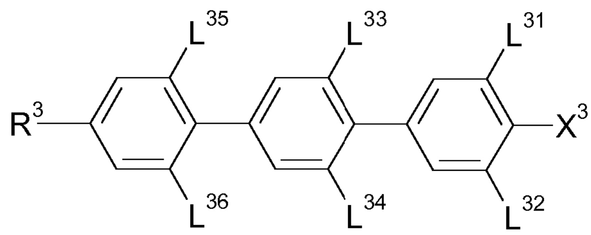

III-2g

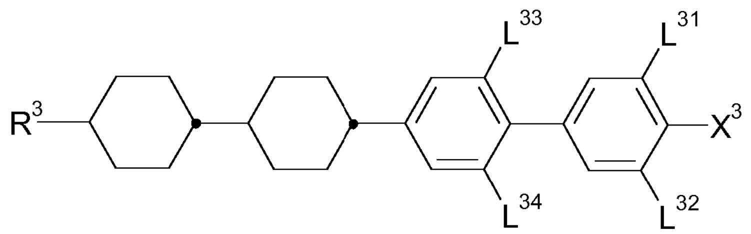

III-2h

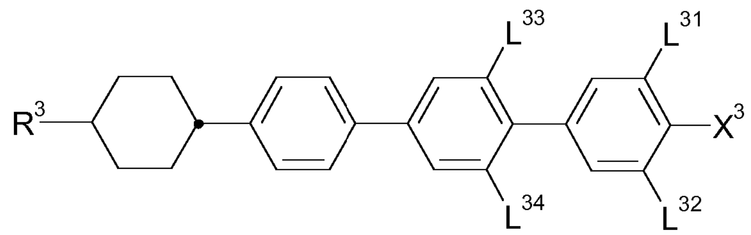

III-2i

wherein the occurring groups have the respective meanings given above and $L^{35}$ and $L^{36}$, independently of one another, denote H or F, and where the compounds of formula I are excluded.

The compounds of formula III-1a, are preferably selected from the group of compounds of formulae III-1a-1 to III-1a-6

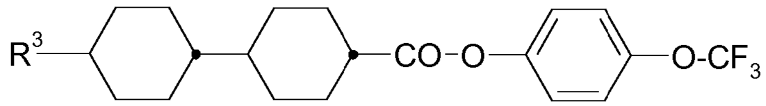

III-1a-1

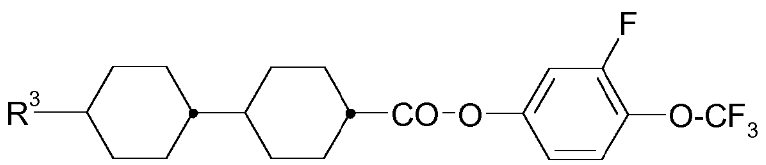

III-1a-2

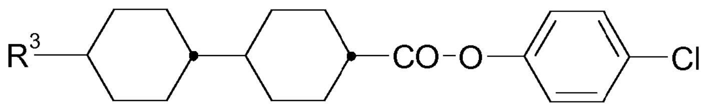

III-1a-3

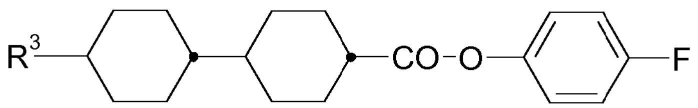

III-1a-4

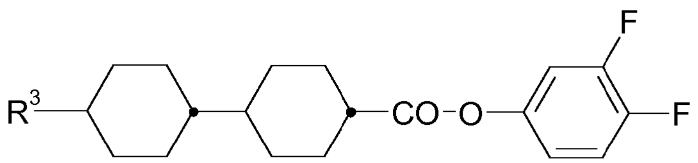

III-1a-5

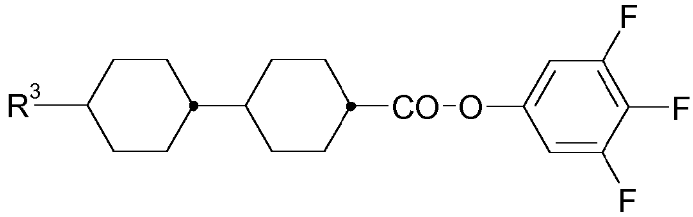

III-1a-6

wherein the $R^3$ has the meaning given above.

In another preferred embodiment the compounds of formula III-2a are selected from the group of compounds of formulae III-2a-1 to III-2a-4

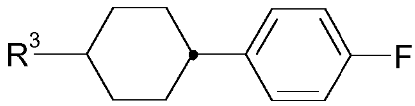

III-2a-1

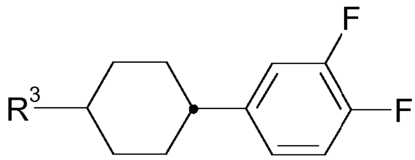

III-2a-2

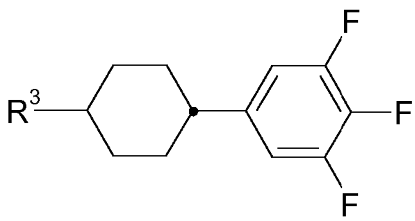

III-2a-3

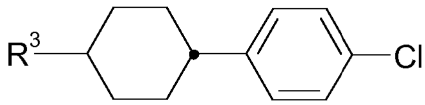

III-2a-4

wherein the $R^3$ has the meaning given above.

The compounds of formula III-2b are preferably selected from the group of compounds of formulae III-2b-1 and III-2b-2, preferably III-2b-2

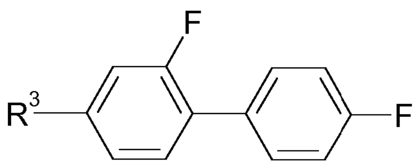

III-2b-1

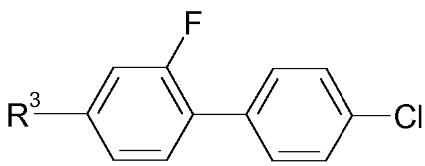

III-2b-2

wherein the $R^3$ has the meaning given above.

The compounds of formula II-2c, are preferably selected from the group of compounds of formulae III-2c-1 to III-2c-5

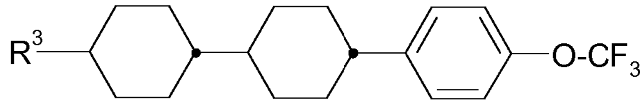

III-2c-1

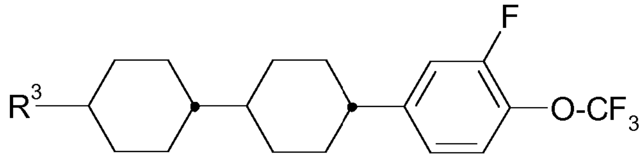

III-2c-2

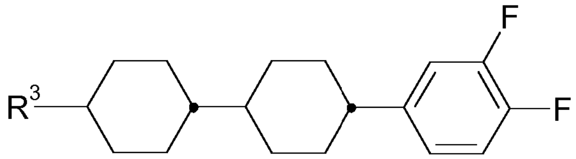

III-2c-3

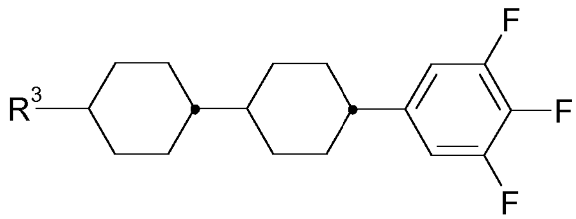

III-2c-4

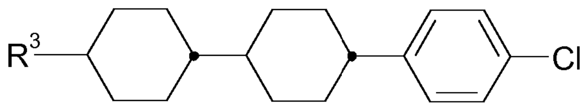

III-2c-5

wherein the $R^3$ has the meaning given above.

The compounds of formulae III-2d and III-2e are preferably selected from the group of compounds of formulae III-2d-1 and III-2e-1

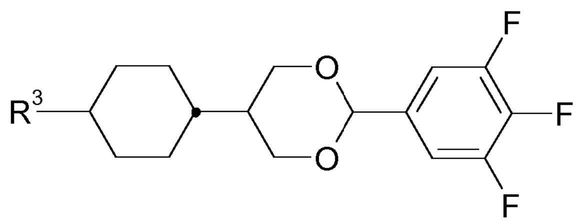

III-2d-1

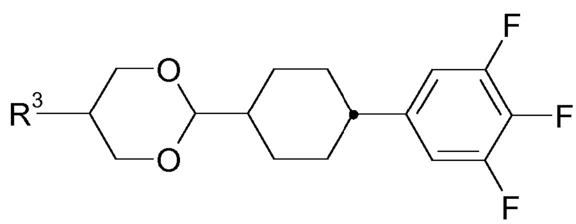

III-2e-1

wherein the $R^3$ has the meaning given above.

The compounds of formula III-2f are preferably selected from the group of compounds of formulae III-2f-1 to III-2f-7

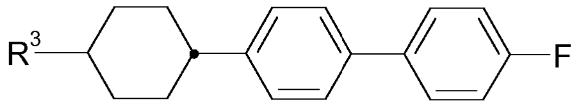

III-2f-1

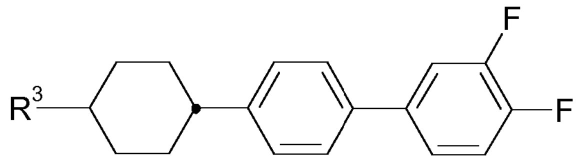

III-2f-2

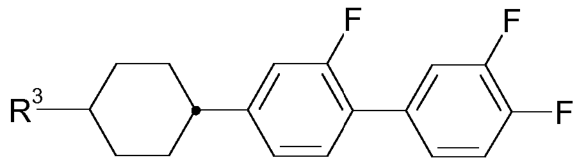

III-2f-3

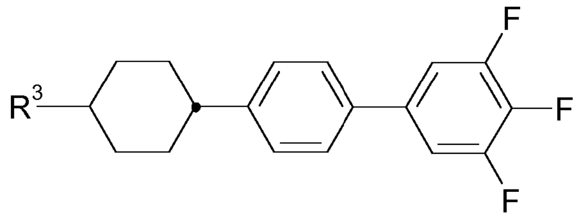

III-2f-4

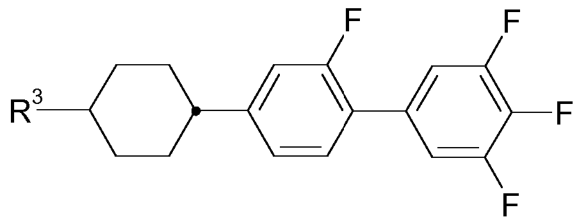

III-2f-5

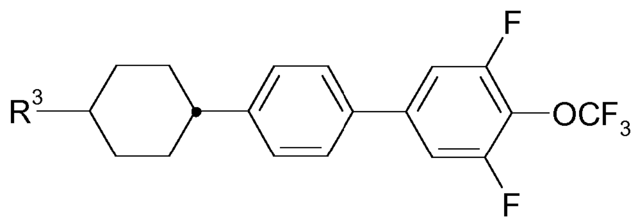

III-2f-6

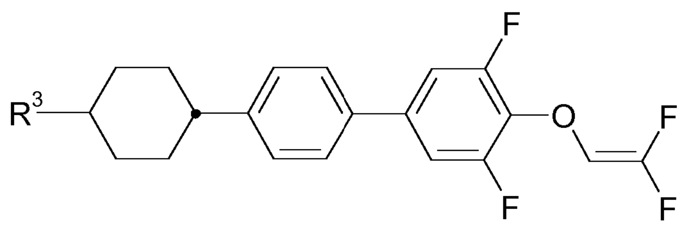

III-2f-7

wherein the $R^3$ has the meaning given above.

The compounds of formula III-2g, are preferably selected from the group of compounds of formulae III-2g-1 to III-2g-5

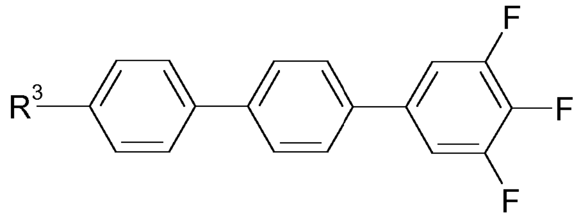

III-2g-1

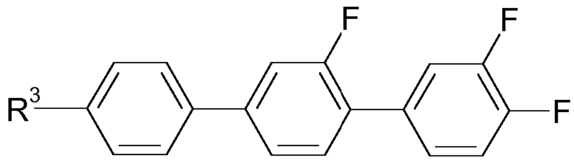

III-2g-2

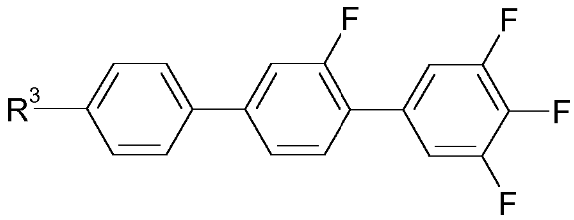

III-2g-3

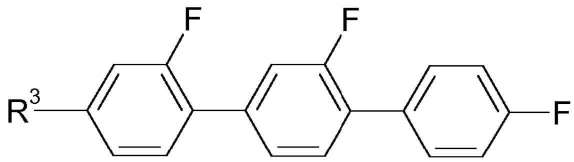

III-2g-4

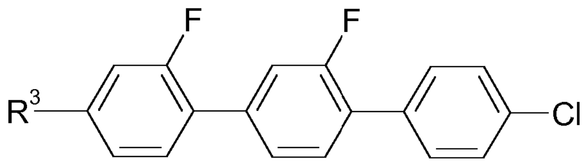

III-2g-5

wherein the $R^3$ has the meaning given above.

The compounds of formula III-2h are preferably selected from the group of compounds of formulae III-2h-1 to III-2h-3

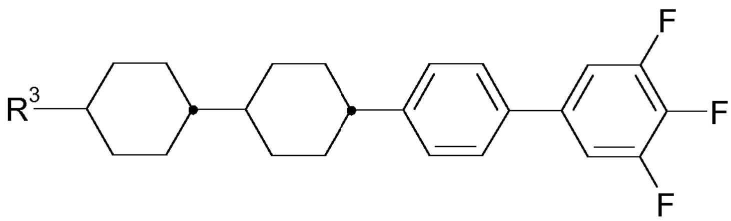

III-2h-1

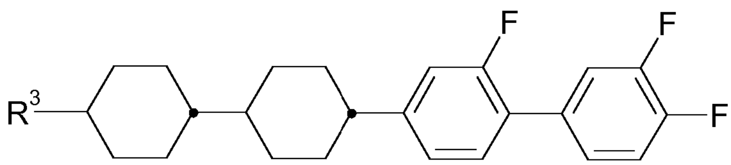

III-2h-2

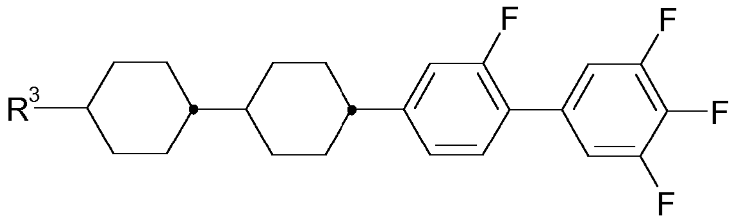

III-2h-3

wherein the $R^3$ has the meaning given above.

The compounds of formula III-2i are preferably selected from the group of compounds of formulae III-2i-1 to III-2i-6

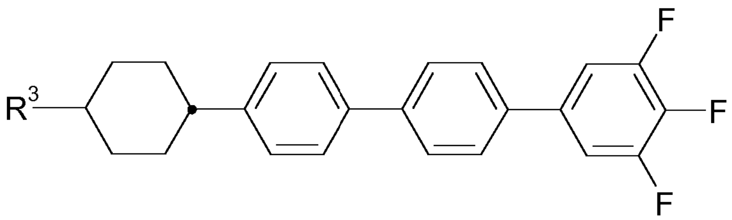

III-2i-1

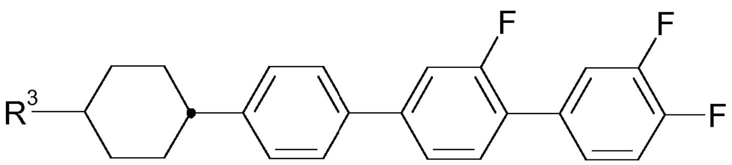

III-2i-2

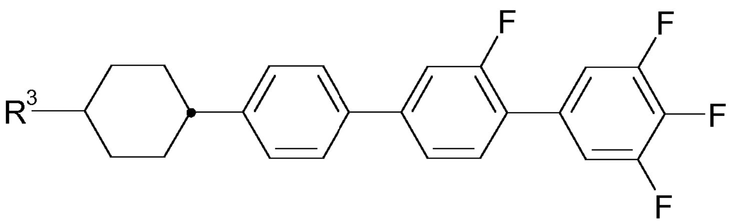

III-2i-3

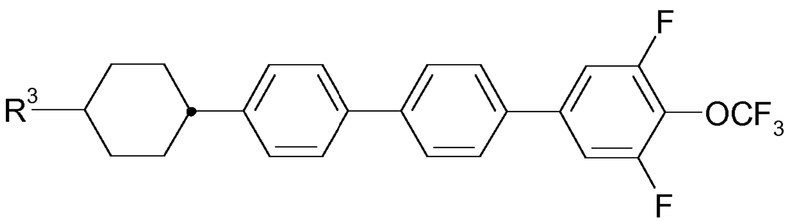

III-2i-4

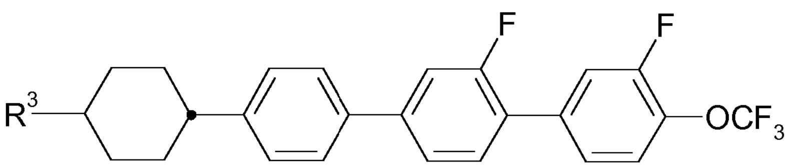

III-2i-5

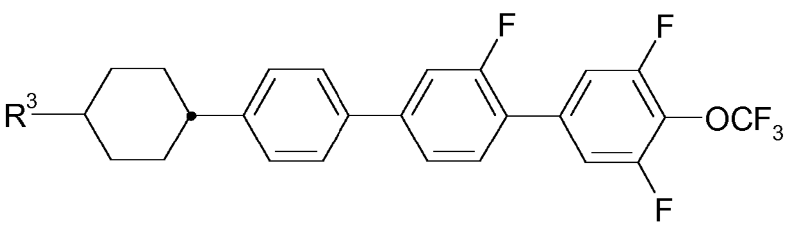

III-2i-6

wherein the $R^3$ has the meaning given above.

Alternatively or additionally to compounds of formulae III-1 and/or III-2 the media according to the present invention my comprise one or more compounds of formula III-3,

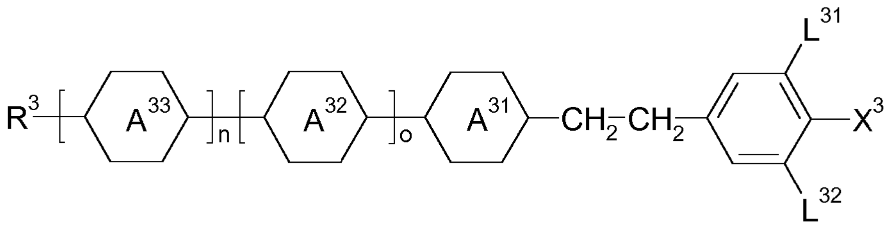

III-3

wherein the occurring groups have the respective meanings given under formula III above, and preferably of formula III-3a

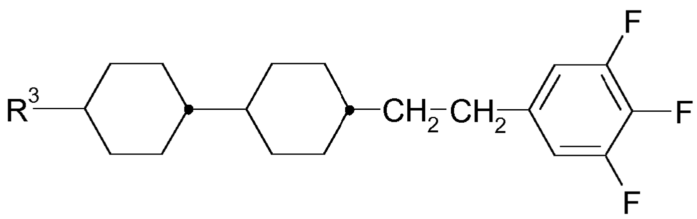

III-3a

wherein the $R^3$ has the meaning given above.

Preferably the liquid crystalline media according to the present invention comprise one or more compounds of formula IV preferably selected from the group of compounds of formulae IV-1 to IV-5

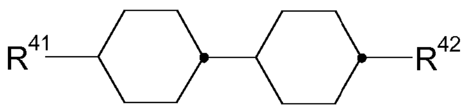

IV-1

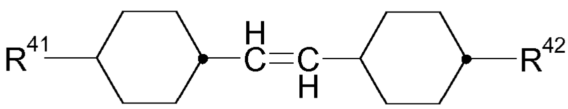

IV-2

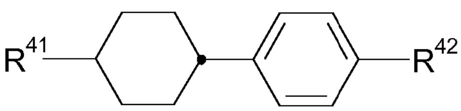

IV-3

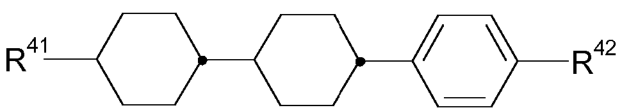

IV-4

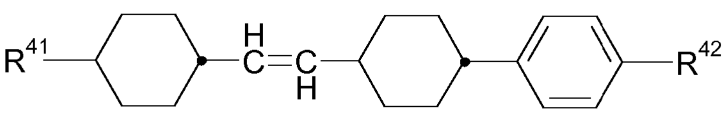

IV-5

wherein $R^{41}$ and $R^{42}$ have the respective meanings given under formula IV above and in formulae IV-1, IV-4 and IV-5 $R^{41}$ preferably is alkyl or alkenyl, preferably alkenyl and $R^{42}$ preferably is alkyl or alkenyl, preferably alkyl; in formula IV-2 $R^{41}$ and $R^{42}$ preferably are alkyl and in formula IV-3 $R^{41}$ preferably is alkyl or alkenyl, preferably alkyl and $R^{42}$ preferably is alkyl or alkoxy, preferably alkoxy.

In a preferred embodiment, the medium comprises one or more compounds of formula IV-1, more preferably

selected from its respective subformulae of formula CC-n-V and/or CC-nV-m, more preferably of formula CC-n-V and most preferably of formula CC-3-V. The definitions of these abbreviations (acronyms) are given in table B below.

In a preferred embodiment, the medium comprises one or more compounds of formula IV-4, more preferably selected from its respective subformulae of formula CCP-V-n and/or CCP-nV-m and/or CCP-Vn-m, more preferably of formula CCP-V-n and/or CCP-V2-n and most preferably selected from the group of formulae CCP-V-1 and CCP-V2-1. The definitions of these abbreviations (acronyms) are given in table B below.

Preferably the medium comprises compounds selected from the group of compounds of formulae IV-1, IV-3, IV-4 and IV-5, preferably one or more compounds of formula IV-1 and one or more compounds selected from the group of formulae IV-3 or IV-4.

Optionally it can be preferred that the medium further comprises one or more compounds of formula IV selected from the group of compounds of formulae IV-6 to IV-13

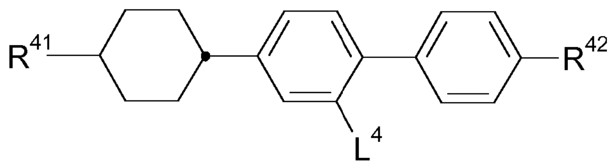

IV-6

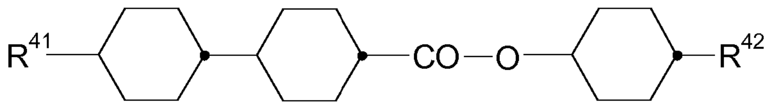

IV-7

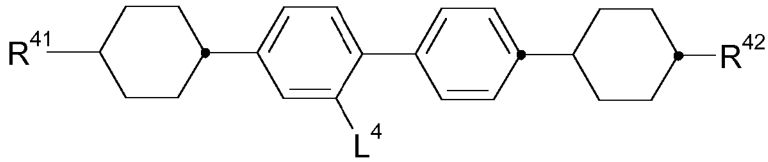

IV-8

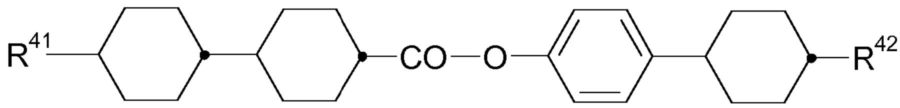

IV-9

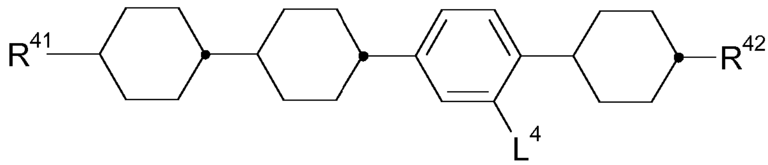

IV-10

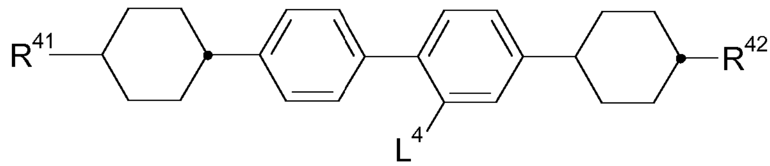

IV-11

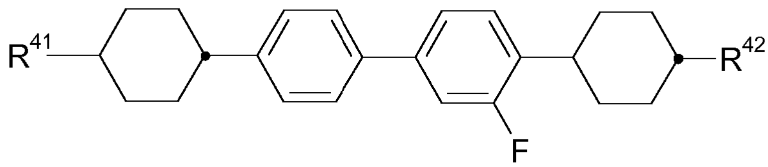

IV-12

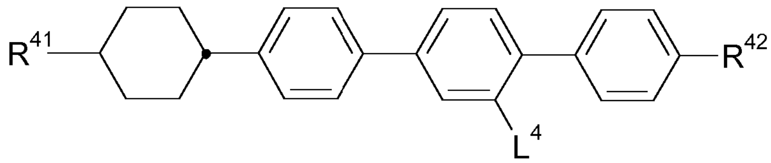

IV-13

wherein

$R^{41}$ and $R^{42}$ independently of each other, denote alkyl, alkoxy, fluorinated alkyl or fluorinated alkoxy with 1 to 7 C-atoms, alkenyl, alkenyloxy, alkoxyalkyl or fluorinated alkenyl with 2 to 7 C-atoms and

$L^4$ denotes H or F.

Alternatively or additionally to compounds of formulae II and/or III the media according to the present invention my comprise one or more compounds of formula V

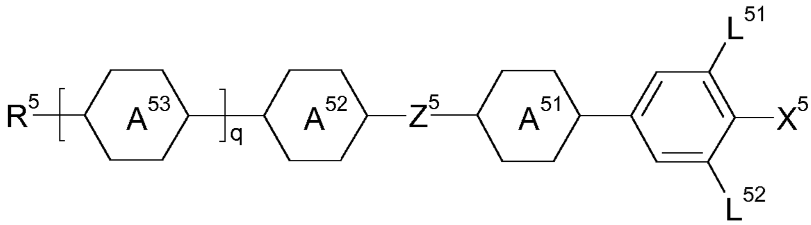

V

wherein

$R^5$ is alkyl, alkoxy, fluorinated alkyl or fluorinated alkoxy with 1 to 7 C-atoms, alkenyl, alkenyloxy, alkoxyalkyl or fluorinated alkenyl with 2 to 7 C-atoms, and preferably is alkyl or alkenyl,

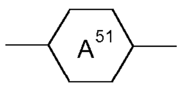

to

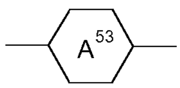

are, independently of each other,

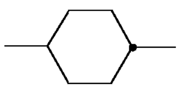 , 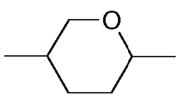 , 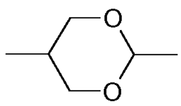 ,

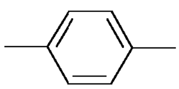 , 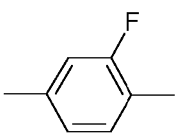 , 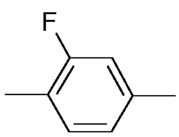

or

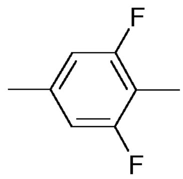

,

$L^{51}$ and $L^{52}$, independently of each other, denote H or F, preferably $L^{51}$ denotes F and

$X^5$ denotes halogen, halogenated alkyl or alkoxy with 1 to 3 C-atoms or halogenated alkenyl or alkenyloxy with 2 or 3 C-atoms, preferably F, Cl, $-OCF_3$ or $-CF_3$, most preferably F, Cl or $-OCF_3$,

$Z^5$ denotes $-CH_2CH_2-$, $-CF_2CF_2-$, -COO-, *trans*- -CH=CH-, *trans*- -CF=CF- or $-CH_2O$, preferably $-CH_2CH_2-$, -COO- or trans- -CH=CH- and most preferably -COO- or $-CH_2CH_2-$, and

q is 0 or 1.

Preferably the media according to the present invention comprises one or more compounds of formula V, preferably selected from the group of compounds of formulae V-1 and V-2

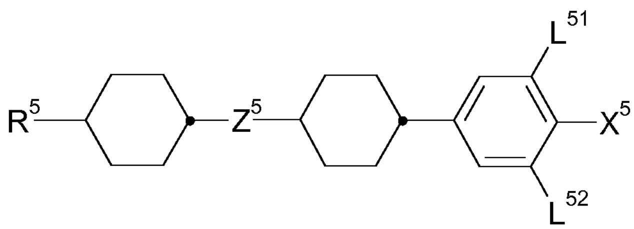

V-1

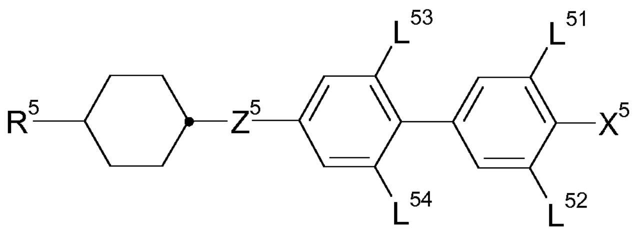

V-2

wherein the occurring groups have the respective meanings given above and $L^{53}$ and $L^{54}$ are, independently of one another, H or F and preferably $Z^5$ is $-CH_2-CH_2-$.

Preferably the compounds of formula V-1 are selected from the group of compounds of formulae V-1a and V-1b

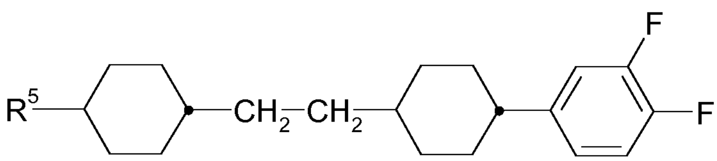

V-1a

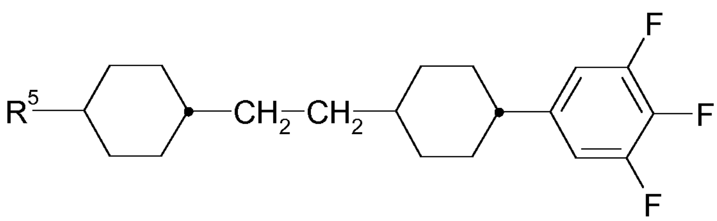

V-1b

wherein the $R^5$ has the meaning given above.

Preferably the compounds of formula V-2 are selected from the group of compounds of formulae V-2a to V-2d

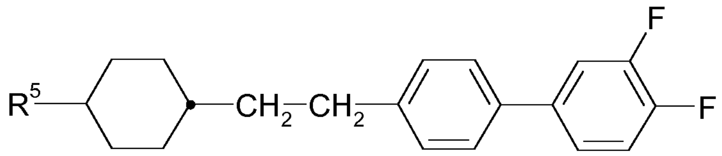

V-2a

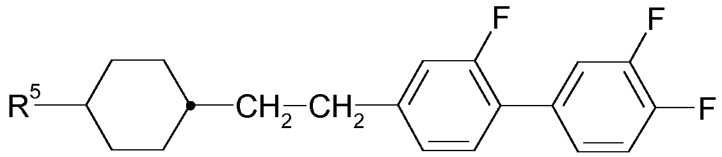

V-2b

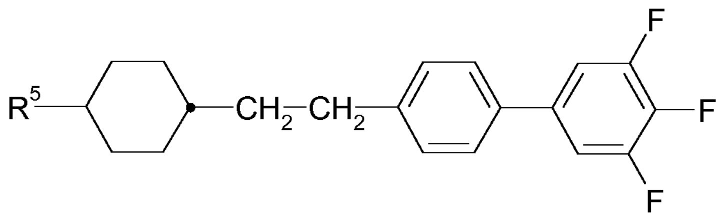

V-2c

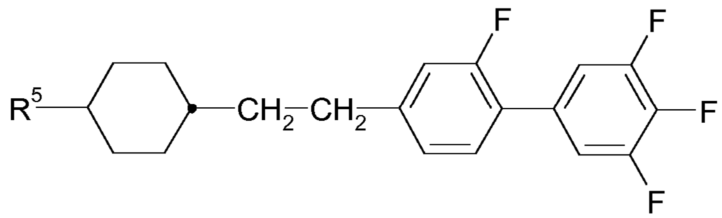

V-2d

wherein the $R^5$ has the meaning given above.

Preferably the liquid crystalline media according to the present invention additionally comprise one or more compounds of formula VI

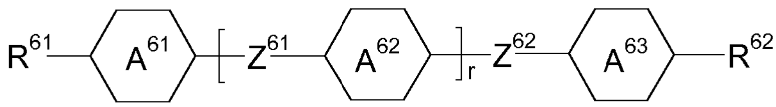

VI

wherein

$R^{61}$ and $R^{62}$ independently of each other have the meaning given for $R^2$ under formula II above, preferably $R^{61}$ is alkyl and $R^{62}$ is alkyl or alkenyl,

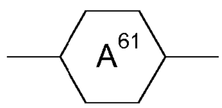

in each occurrence independently of each other, denote to

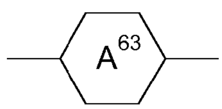

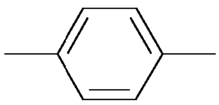 , 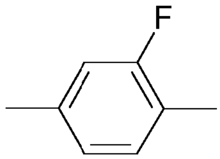 , 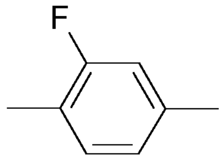

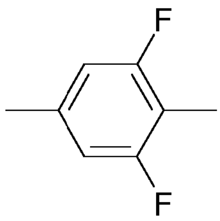 or 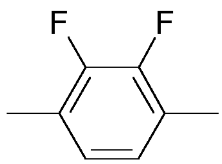 ,

$Z^{61}$ and $Z^{62}$ are, independently of each other, and in case $Z^{61}$ is present twice, also these independently of each other, $-CH_2CH_2-$, -COO-, *trans*- -CH=CH-, *trans*- -CF=CF-, $-CH_2O-$, $-CF_2O-$ or a single bond, preferably at least one of them is a single bond, and

r is 0, 1 or 2, preferably 0 or 1.

Preferably the compounds of formula VI are selected from the group of compounds of formulae VI-1 to VI-4

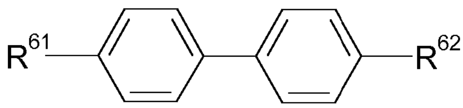

VI-1

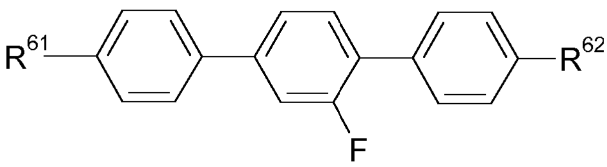

VI-2

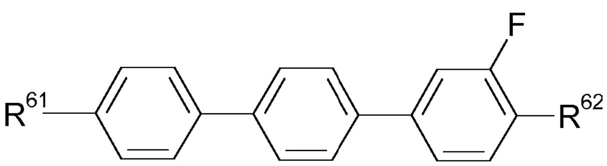

VI-3

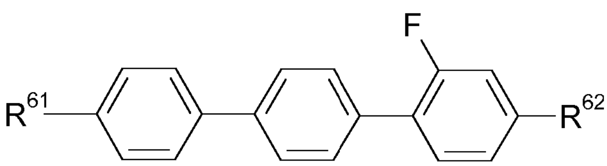

VI-4

wherein $R^{61}$ and $R^{62}$ have the respective meanings given under formula VI above and $R^{61}$ preferably is alkyl and in formula VI-1 $R^{62}$ preferably is alkenyl, preferably $-(CH_2)_2-CH=CH-CH_3$ and in formula VI-2 $R^{62}$ preferably is alkenyl, preferably $-(CH_2)_2-CH=CH_2$ and in formulae VI-3 and VI-4 $R^{62}$ preferably is alkyl.

Preferably the medium comprises one or more compounds selected from the group of compounds of formulae VI-1 to VI-4 wherein $R^{61}$ preferably is alkyl and in formula VI-1 $R^{62}$ preferably is alkenyl, preferably $-(CH_2)_2-CH=CH-CH_3$ and in formula VI-2 $R^{62}$ preferably is alkenyl, preferably$-(CH_2)_2-CH=CH_2$ and in formulae VI-3 and VI-4 $R^{62}$ preferably is alkyl.

The compounds of formula VI-1 are preferably selected from its subformula PP-n-2Vm, more preferably of

formula PP-1-2V1. The definitions of these abbreviations (acronyms) are given in table B below.

In a preferred embodiment, the medium comprises one or more compounds of formula VI-2, more preferably of its subformula PGP-n-m, more preferably of its subformulae PGP-2-m and PGP-3-m, more preferably selected from of formulae PGP-2-2V, PGP-3-2, PGP-3-3, PGP-3-4, PGP-3-5.

The definitions of these abbreviations (acronyms) are given in table B below.

Preferably the liquid crystalline medium according to the instant invention comprises one or more compounds of formula I and II, preferably of formula II-1 and/or II-3.

In a preferred embodiment, the medium comprises one or more compounds of formula I, II, III, IV and VI.

In a preferred embodiment, the medium comprises one or more compounds of formula II-1a and/or II-1g In a preferred embodiment, the medium comprises one or more compounds of formula III-2, preferably selected from the group of compounds of the formulae III-2c and III-2f.

In a preferred embodiment, the medium comprises one or more compounds selected from the group of compounds of the formulae III-2c and III-2f and one or more compounds selected from the group of compounds of the formulae III-2h and III-2i.

In a preferred embodiment, the medium comprises one or more compounds of the formula VI-2.

In a preferred embodiment the medium comprises one or more compounds of formula IV, more preferably of formula IV-1, more preferably selected from its respective subformulae of formula CC-n-V and/or CC-n-Vm, more preferably of formula CC-n-V1 and/ or CC-n-V and most preferably selected from the group of formulae CC-3-V, CC-4-V, CC-5-V and CC-3-V1.

Also other mesogenic compounds, which are not explicitly mentioned above, can optionally and beneficially be used in the media according to the instant invention. Such compounds are known to the expert in the field.

The $\Delta n$ of the liquid crystal media according to the instant invention preferably is in the range of 0.070 or more to 0.145 or less, more preferably in the range of 0.080 or more to 0.140 or less and most preferably in the range of 0.090 or more to 0.135 or less.

The $\Delta\varepsilon$ of the liquid crystal medium according to the invention preferably is 4 or more, more preferably 6 or more and most preferably 8 or more.

The $\Delta\varepsilon$ of the liquid crystal medium according to the invention is 20 or less, preferably 17 or less, more preferably 14 or less.

In a preferred embodiment of the present invention the $\Delta\varepsilon$ of the liquid crystal medium is in the range of from 2 to 12, more preferably from 3 to 10 and particularly preferably 4 to 8.

In another preferred embodiment of the present invention the $\Delta\varepsilon$ of the liquid crystal medium is in the range of from 6 to 18, more preferably from 8 to 16 and particularly preferably from 10 to 14.

The rotational viscosity of the medium according to the present invention is 120 mPa·s or less, preferably 100 mPa·s or less and particularly preferably 80 mPa·s or less.

The liquid-crystal media in accordance with the present invention preferably have a clearing point of 70°C or more, more preferably 75°C or more and particularly preferably 80°C or more.

The liquid-crystal media in accordance with the present invention preferably have a clearing point of 120 °C or less, more preferably 110°C or less, particularly preferably 100°C or less.

The nematic phase of the media according to the invention preferably extends at least from -10°C or less to 70°C or more. It is advantageous for the media according to the invention to exhibit even broader nematic phase ranges, preferably at least from -20°C or less to 75°C or more, very preferably at least from -30°C or less to 85°C or more and in particular at least from -40°C or less to 95°C or more.

Preferably the storage stability of the inventive media at a temperature of -20 °C in the bulk ($LTS_{bulk}$) is 120 h or more, more preferably 500 h or more and most preferably 1,000 h or more.

More preferably the storage stability of the inventive media at a temperature of -30 °C in the bulk ($LTS_{bulk}$) is 120 h or more, more preferably 500 h or more and most preferably 1,000 h or more.

Most preferably the storage stability of the inventive media at a temperature of -40 °C in the bulk ($LTS_{bulk}$) is 120 h or more, more preferably 250 h or more and most preferably 500 h or more.

The storage stability of the inventive media at a temperature of -20 °C, more preferably at a temperature of -30 °C, and most preferably at a temperature of -40 °C, in the bulk ($LTS_{cell}$) is preferably 250 h or more, more preferably 500 h or more and most preferably 1,000 h or more.

The expression "to have a nematic phase" here means on the one hand that no smectic phase and no crystallisation is observed at low temperatures at the corresponding temperature within a given period of time and on the other hand that no clearing occurs on heating from the nematic phase.

The concentration of compounds of formula I in the medium preferably is in the range of from 1 % to 15 %, more preferably from 2 % to 10 % and particularly preferably from 3 % to 6 %.

In a preferred embodiment of the present invention,

the total concentration of compounds of formula II in the medium is in the range of from 20 % to 60 %, more preferably from 30 % to 50 % and particularly preferably from 35 % to 45 %;

the total concentration of compounds of formula III in the medium is in the range of from 15 % to 45 %, more preferably from 20 % to 40 % and particularly preferably from 25 % to 35 %;

the total concentration of compounds of formula IV in the medium is in the range of from 10 % to 40 %, more preferably from 15 % to 35 % and particularly preferably from 22 % to 28 %;

the total concentration of compounds of formula VI in the medium is in the range of from 10 % to 30 %, more preferably from 15 % to 25 % and particularly preferably from 17 % to 22 %.

In another preferred embodiment of the present invention,

the total concentration of compounds of formula II in the medium is in the range of from 10 % to 30 %, more preferably from 15 % to 25 % and particularly preferably from 17 % to 22 %;

the total concentration of compounds of formula III in the medium is in the range of from 2 % to 20 %, more preferably from 5 % to 15 % and particularly preferably from 8 % to 12 %;

the total concentration of compounds of formula IV in the medium is in the range of from 20 % to 60 %, more preferably from 30 % to 50 % and particularly preferably from 35 % to 45 %;

the total concentration of compounds of formula VI in the medium is in the range of from 10 % to 30 %, more preferably from 15 % to 25 % and particularly preferably from 17 % to 22 %;

Optionally, the inventive media can comprise further liquid crystal compounds in order to adjust the physical properties. Such compounds are known to the expert. Their concentration in the media according to the instant invention is preferably 0 % to 30 %, more preferably 0.1 % to 20 % and most preferably 1 % to 15 %.

The definitions of these abbreviations (acronyms) are given in table B below. In this preferred embodiment, preferably the concentration of compounds of formula IV is greater than 40%, more preferably greater than 42%, and most preferably greater than 45%.

Preferably the liquid crystal media contain 50 % to 100 %, more preferably 70 % to 100 % and most preferably 90 % to 100 % compounds of the formulae I to VI and preferably I to IV and VI.

In the present application the term dielectrically positive means compounds or components with $\Delta\varepsilon > 3.0$, dielectrically neutral with $-1{,}5 \leq \Delta\varepsilon \leq 3.0$ and dielectrically negative with $\Delta\varepsilon < -1{,}5$. $\Delta\varepsilon$ is determined at a frequency of 1 kHz and at 20 °C. The dielectric anisotropy of the respective compound is determined from the results of a solution of 10 % of the respective individual compound in a nematic host mixture. In case the solubility of the respective compound in the host mixture is less than 10 % the concentration is reduced to 5 %. The capacities of the test mixtures are determined both in a cell with homeotropic and with homogeneous alignment. The cell gap of both types of cells is approximately 20 μm. The voltage applied is a rectangular wave with a frequency of 1 kHz and a root mean square value typically of 0.5 V to 1.0 V, however, it is always selected to be below the capacitive threshold of the respective test mixture.

$$\Delta\varepsilon \text{ is defined as } (\varepsilon_{||} - \varepsilon_{\perp}) \text{, whereas } \varepsilon_{av.} \text{ is } (\varepsilon_{||} + 2\ \varepsilon_{\perp}) / 3.$$

For dielectrically positive compounds the mixture ZLI-4792 and for dielectrically neutral, as well as for dielectrically negative compounds, the mixture ZLI-3086, both of Merck KGaA, Germany are used as host mixture, respectively. The dielectric permittivities of the compounds are determined from the change of the respective values of the host mixture upon addition of the compounds of interest. The values are extrapolated to a concentration of the compounds of interest of 100 %.

Components having a nematic phase at the measurement temperature of 20 °C are measured as such, all others are treated like compounds.

The term threshold voltage refers in the instant application to the optical threshold and is given for 10 % relative contrast ($V_{10}$, also abbreviated to $V_{(10,0,20)}$ indicating perpendicular observation and 20°C) and the term saturation voltage refers to the optical saturation and is given for 90 % relative contrast ($V_{90}$, also abbreviated to $V_{(90,0,20)}$ indicating perpendicular observation and 20°C) both, if not explicitly stated otherwise. The capacitive threshold voltage ($V_0$), also

called Freedericksz-threshold ($V_{Fr}$) is only used if explicitly mentioned.

The following abbreviations are used:

$V_{op}$ = operating voltage;
$t_{on}$ = time after switching on until 90% of the maximum contrast is achieved, measured from 10% of the maximum contrast;
$t_{off}$ = time after switching off until 10% of the maximum contrast is achieved, measured from 90% of the maximum contrast;
$t_{sum} = t_{on} + t_{off}$.

The ranges of parameters given in this application are all including the limiting values, unless explicitly stated otherwise.

Throughout this application, unless explicitly stated otherwise, all concentrations are given in mass percent and relate to the respective complete mixture, all temperatures are given in degrees centigrade (Celsius) and all differences of temperatures in degrees centigrade. All physical properties have been and are determined according to "Merck Liquid Crystals, Physical Properties of Liquid Crystals", Status Nov. 1997, Merck KGaA, Germany and are given for a temperature of 20 °C, unless explicitly stated otherwise. The optical anisotropy ($\Delta n$) is determined at a wavelength of 589.3 nm. The dielectric anisotropy ($\Delta\varepsilon$) is determined at a frequency of 1 kHz. The threshold voltages, as well as all other electro-optical properties have been determined with test cells prepared at Merck KGaA, Germany. The test cells for the determination of $\Delta\varepsilon$ had a cell gap of approximately 20 $\mu$m. The electrode was a circular ITO electrode with an area of 1.13 $cm^2$ and a guard ring. The orientation layers were lecithin for homeotropic orientation ($\varepsilon_{||}$) and polyimide AL-1054 from Japan Synthetic Rubber for homogeneous orientation ($\varepsilon_{\perp}$). The capacities were determined with a frequency response analyser Solatron 1260 using a sine wave with a voltage of 0.3 $V_{rms}$. The light used in the electro-optical measurements was white light. The set up used was commercially available equipment of Otsuka, Japan. The characteristic voltages have been determined under perpendicular observation. The threshold ($V_{10}$) - mid grey ($V_{50}$) - and saturation ($V_{90}$) voltages have been determined for 10 %, 50 % and 90 % relative contrast, respectively.

The storage stability in the bulk ($LTS_{bulk}$) of the media according to the invention at a given temperature T is determined by visual inspection. 2 g of the media of interest are filled into a closed glass vessel (bottle) of appropriate size placed in a refrigerator at a predetermined temperature. The bottles are checked at defined time intervals for the occurrence of smectic phases or crystallisation. For every material and at each temperature two bottles are stored. If crystallisation or the appearance of a smectic phase is observed in at least one of the two correspondent bottles the test is terminated and the time of the last inspection before the one at which the occurrence of a higher ordered phase is observed is recorded as the respective storage stability.

For the determination of the storage stability in LC cells ($LTS_{cell}$) of the media according to the present invention at a given temperature T, the media are filled into TN-type LC test cells with orientation layers, having an approximate surface area of 3 $cm^2$, an electrode area of about 3 $cm^2$ and a cell gap of 6 $\mu$m. The cells have no spacers in the area covered by the LC. Only in the edge seal spacers are used. The cells are sealed, polarizers are attached to the cells and the cells are and placed in a refrigerator with a window and internal lighting at a predetermined temperature. Generally, three cells each are filled with a given LC for each temperature investigated. The cells inside the refrigerator are inspected visually through a window defined time intervals for the occurrence of smectic phases or crystallization. Here too, the time of the last inspection before the one at which the occurrence of a higher ordered phase is observed in the first one of a given set of test cells is recorded as the respective storage stability.

The liquid crystal media according to the present invention can contain further additives and chiral dopants in usual concentrations. The total concentration of these further constituents is in the range of 0 % to 10 %, preferably 0.1 % to 6 %, based on the total mixture. The concentrations of the individual compounds used each are preferably in the range of 0.1 % to 3 %. The concentration of these and of similar additives is not taken into consideration for the values and ranges of the concentrations of the liquid crystal components and compounds of the liquid crystal media in this application.

The inventive liquid crystal media according to the present invention consist of several compounds, preferably of 3 to 30, more preferably of 4 to 20 and most preferably of 4 to 16 compounds. These compounds are mixed in conventional way. As a rule, the required amount of the compound used in the smaller amount is dissolved in the compound used in the greater amount. In case the temperature is above the clearing point of the compound used in the higher concentration, it is particularly easy to observe completion of the process of dissolution. It is, however, also possible to prepare the media by other conventional ways, e.g. using so called pre-mixtures, which can be e.g. homologous or eutectic mixtures of compounds or using so called multi-bottle-systems, the constituents of which are ready to use mixtures themselves.

By addition of suitable additives, the liquid crystal media according to the instant invention can be modified in such a way, that they are usable in all known types of liquid crystal displays, either using the liquid crystal media as

such, like TN-, TN-AMD, ECB-AMD, VAN-AMD, IPS and OCB LCDs and in particular in composite systems, like PDLC, NCAP, PN LCDs and especially in ASM-PA LCDs.

The melting point T(C,N), the transition from the smectic (S) to the nematic (N) phase T(S,N) and the clearing point T(N,I) of the liquid crystals are given in degrees centigrade.

In the present application and especially in the following examples, the structures of the liquid crystal compounds are represented by abbreviations also called acronyms. The transformation of the abbreviations into the corresponding structures is straight forward according to the following two tables A and B. All groups $C_nH_{2n+1}$ and $C_mH_{2m+1}$ are straight chain alkyl groups with n respectively m C-atoms. The interpretation of table B is self-evident. Table A does only list the abbreviations for the cores of the structures. The individual compounds are denoted by the abbreviation of the core followed by a hyphen and a code specifying the substituents $R^1$, R2, $L^1$ and $L^2$ follows:

| Code for $R^1$, $R^2$, $L^1$, $L^2$ | $R^1$ | $R^2$ | $L^1$ | $L^2$ |
|---|---|---|---|---|
| nm | $C_nH_{2n+1}$ | $C_mH_{2m+1}$ | H | H |
| nOm | $C_nH_{2n+1}$ | $OC_mH_{2m+1}$ | H | H |
| nO.m | $OC_nH_{2n+1}$ | $C_mH_{2m+1}$ | H | H |
| n | $C_nH_{2n+1}$ | CN | H | H |
| nN.F | $C_nH_{2n+1}$ | CN | H | F |
| nN.F.F | $C_nH_{2n+1}$ | CN | F | F |
| nF | $C_nH_{2n+1}$ | F | H | H |
| nF.F | $C_nH_{2n+1}$ | F | H | F |
| nF.F.F | $C_nH_{2n+1}$ | F | F | F |
| nOF | $OC_nH_{2n+1}$ | F | H | H |
| nCl | $C_nH_{2n+1}$ | Cl | H | H |
| nCl.F | $C_nH_{2n+1}$ | Cl | H | F |
| nCl.F.F | $C_nH_{2n+1}$ | Cl | F | F |
| $nCF_3$ | $C_nH_{2n+1}$ | $CF_3$ | H | H |
| $nCF_3$.F | $C_nH_{2n+1}$ | $CF_3$ | H | F |
| $nCF_3$.F.F | $C_nH_{2n+1}$ | $CF_3$ | F | F |
| $nOCF_3$ | $C_nH_{2n+1}$ | $OCF_3$ | H | H |
| $nOCF_3$.F | $C_nH_{2n+1}$ | $OCF_3$ | H | F |
| $nOCF_3$.F.F | $C_nH_{2n+1}$ | $OCF_3$ | F | F |
| $nOCF_2$ | $C_nH_{2n+1}$ | $OCHF_2$ | H | H |
| $nOCF_2$.F | $C_nH_{2n+1}$ | $OCHF_2$ | H | F |
| $nOCF_2$.F.F | $C_nH_{2n+1}$ | $OCHF_2$ | F | F |
| nS | $C_nH_{2n+1}$ | NCS | H | H |
| nS.F | $C_nH_{2n+1}$ | NCS | H | F |
| nS.F.F | $C_nH_{2n+1}$ | NCS | F | F |
| rVsN | $C_rH_{2r+1}$-CH=CH-$C_sH_{2s}$- | CN | H | H |
| rEsN | $C_rH_{2r+1}$-O-$C_sH_{2s}$- | CN | H | H |
| nAm | $C_nH_{2n+1}$ | $COOC_mH_{2m+1}$ | H | H |

**Table A:**

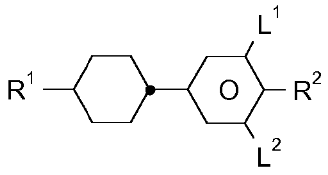

**PCH**

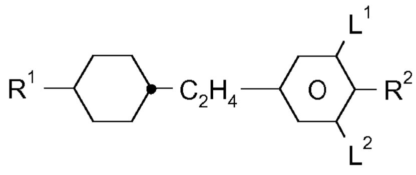

**EPCH**

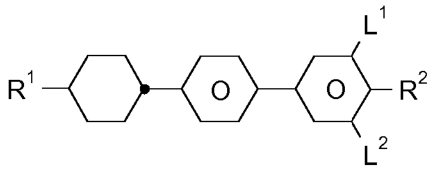

**BCH**

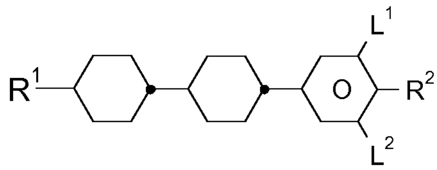

**CCP**

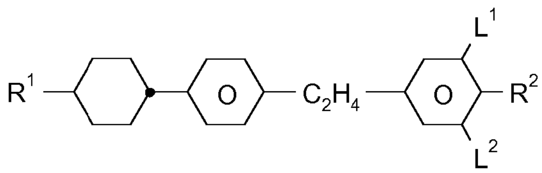

**EBCH**

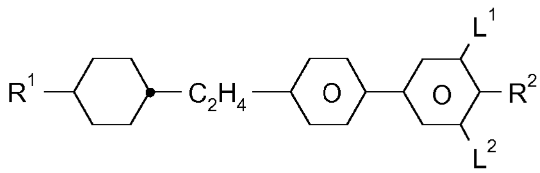

**BECH**

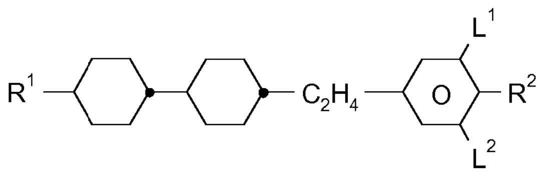

**ECCP**

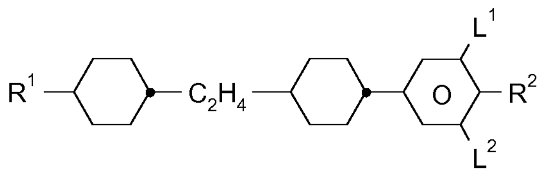

**CECP**

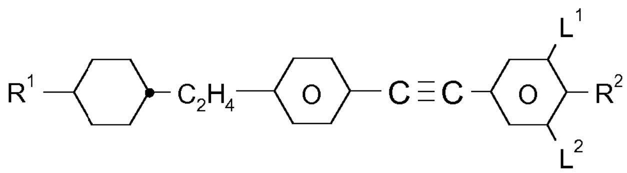

**CEPTP**

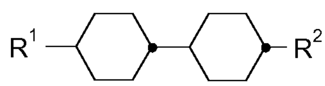

**CCH**

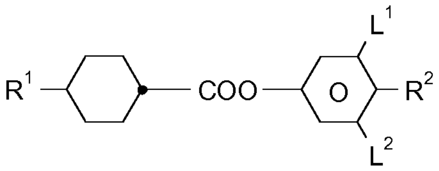

**D**

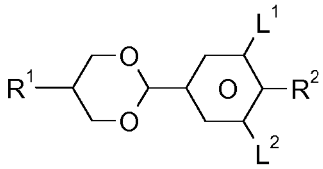

**PDX**

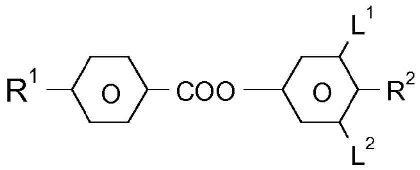

**ME**

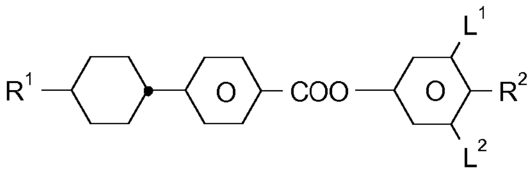

**HP**

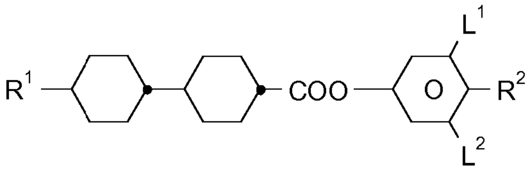

**CP**

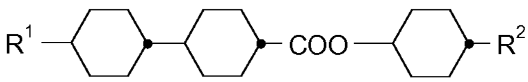

**CH**

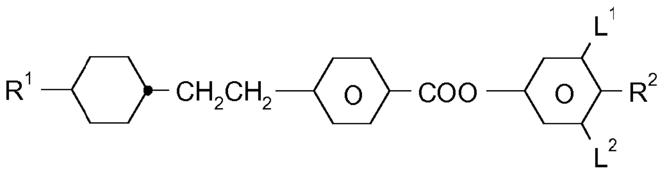

**EHP**

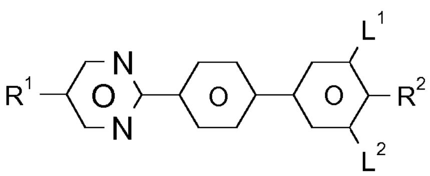

**MPP**

**<u>Table B:</u>**

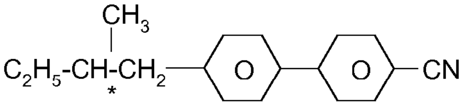

**CB15**

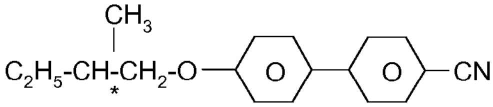

**C15**

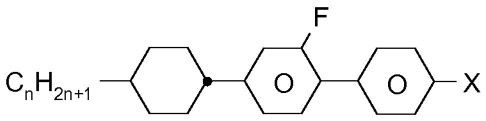

**CGP-n-X** (X = F, Cl, “OT“ = $OCF_3$, “OD“ = $OCF_2H$, “T” = $CF_3$)

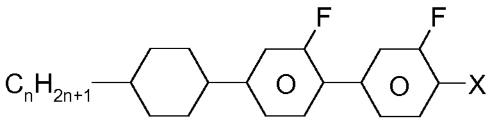

**CGG-n-X** (X = F, Cl, “OT“ = $OCF_3$, “OD“ = $OCF_2H$, “T” = $CF_3$)

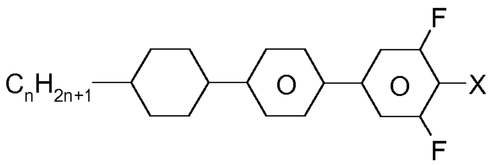

**CPU-n-X** (X = F, Cl, “OT“ = $OCF_3$, “OD“ = $OCF_2H$, “OXF” = $OCH{=}CF_2$, “T” = $CF_3$)

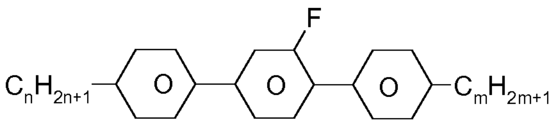

**PGP-n-m**

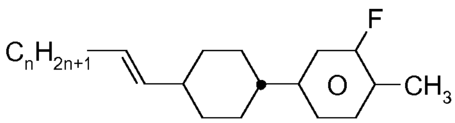

**CG-nV-1**

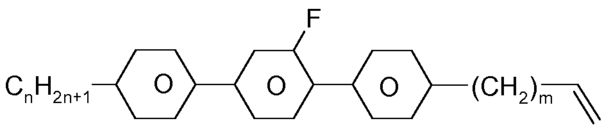

**PGP-n-mV**

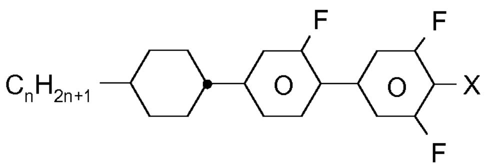

**CGU-n-X** (X = F, Cl, “OT“ = $OCF_3$, “OD“ = $OCF_2H$, “T” = $CF_3$)

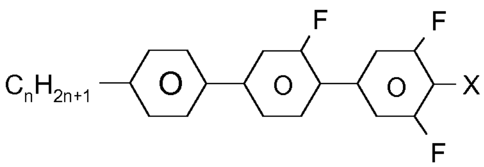

**PGU-n-X** (X = F, Cl, “OT“ = $OCF_3$, “OD“ = $OCF_2H$, “T” = $CF_3$)

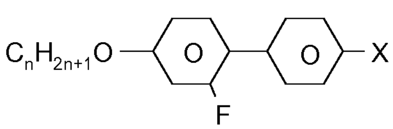

**GP-n-X** (X = F, Cl, “OT“ = $OCF_3$, “OD“ = $OCF_2H$, “T” = $CF_3$)

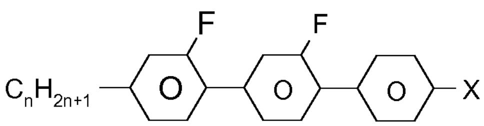

**GGP-n-X** (X = F, Cl, “OT“ = $OCF_3$, “OD“ = $OCF_2H$, “T” = $CF_3$)

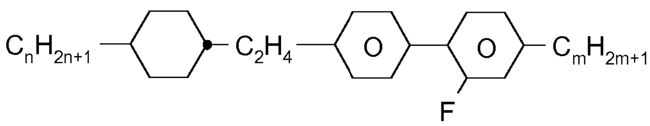

**Inm**

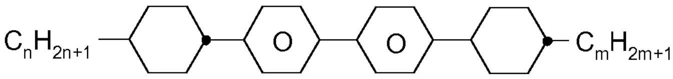

**CBC-nm**

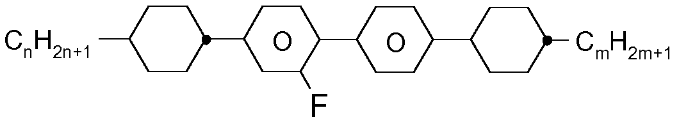

**CBC-nmF**

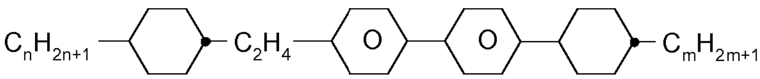

**ECBC-nm**

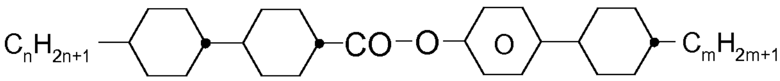

**CCPC-nm**

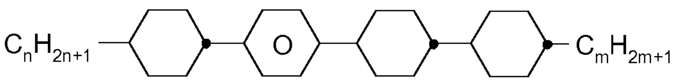

**CPCC-n-m**

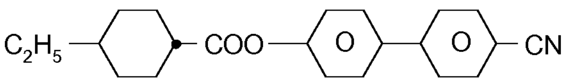

**CHE**

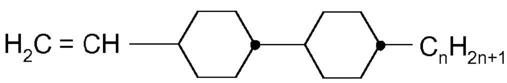

**CC-n-V**

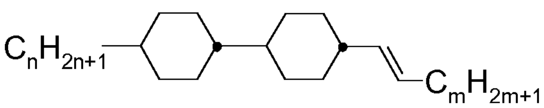

**CC-n-Vm**

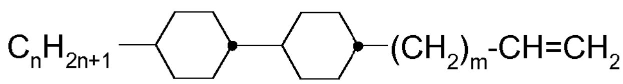

**CC-n-mV**

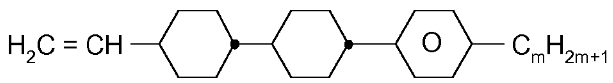

**CCP-V-m**

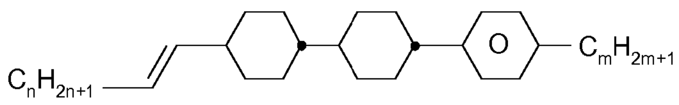

**CCP-nV-m**

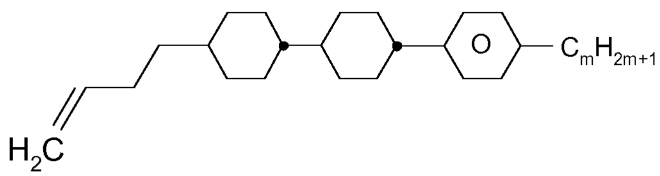

**CCP-V2-m**

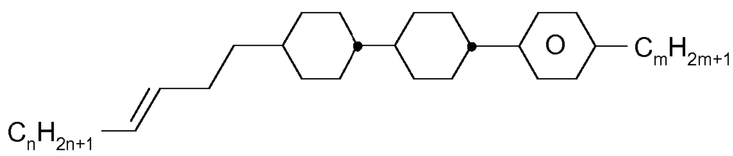

**CCP-nV2-m**

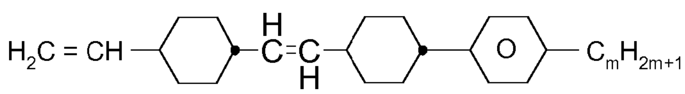

**CVCP-V-m**

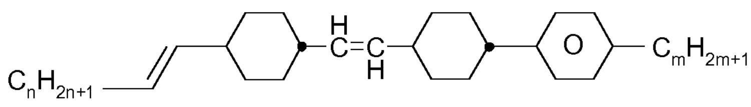

**CVCP-nV-m**

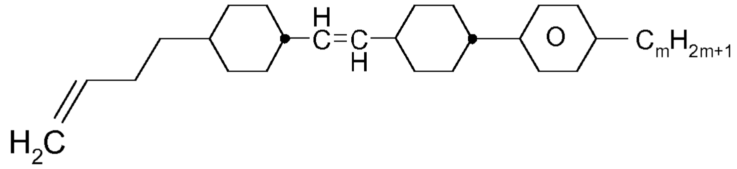

**CVCP-V2-m**

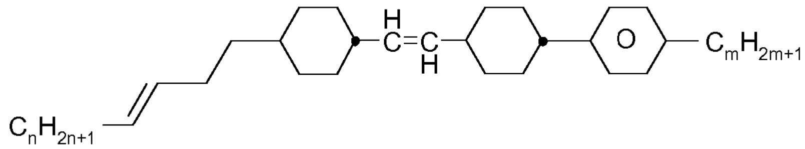

**CVCP-nV2-m**

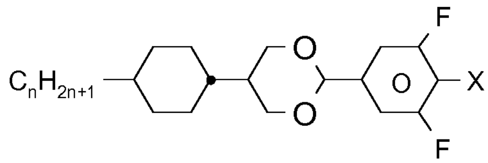

**CDU-n-X** (X = F, Cl, “OT“ = $OCF_3$, “OD“ = $OCF_2H$, “T” = $CF_3$)

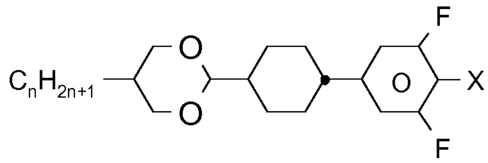

**DCU-n-X** (X = F, Cl, “OT“ = $OCF_3$, “OD“ = $OCF_2H$, “T” = $CF_3$)

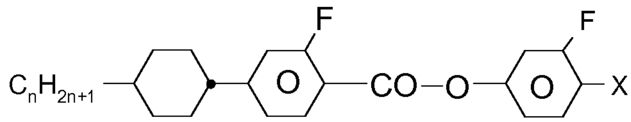

**CGZG-n-X** (X = F, Cl, “OT“ = $OCF_3$, “OD“ = $OCF_2H$, “T” = $CF_3$)

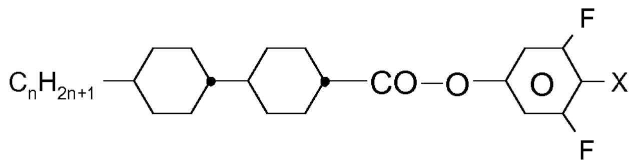

**CCZU-n-X** (X = F, Cl, “OT“ = $OCF_3$, “OD“ = $OCF_2H$, “T” = $CF_3$)

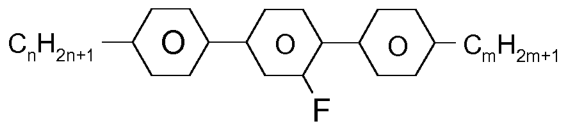

**PGP-n-m**

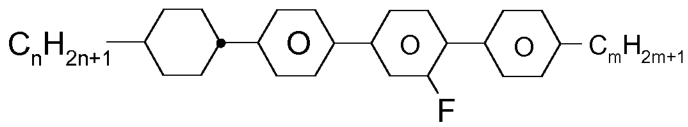

**CPGP-n-m**

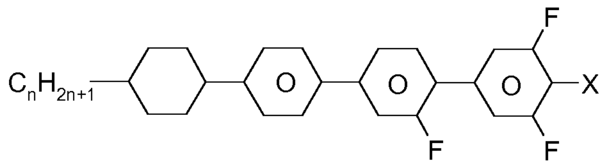

**CPGU-n-X** (X = F, Cl, “OT“ = $OCF_3$, “OD“ = $OCF_2H$, “T” = $CF_3$)

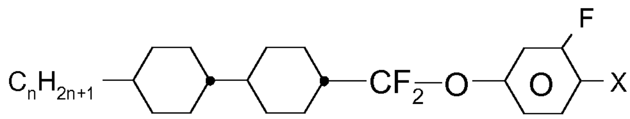

**CCQG-n-X** (X = F, Cl, “OT“ = $OCF_3$, “OD“ = $OCF_2H$, “T” = $CF_3$)

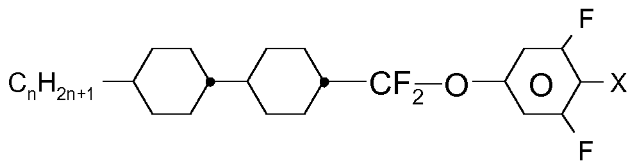

**CCQU-n-X** (X = F, Cl, “OT“ = $OCF_3$, “OD“ = $OCF_2H$, “T” = $CF_3$)

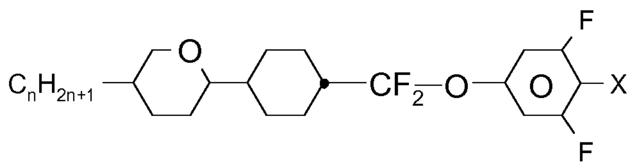

**ACQU-n-X** (X = F, Cl, “OT“ = $OCF_3$, “OD“ = $OCF_2H$, “T” = $CF_3$)

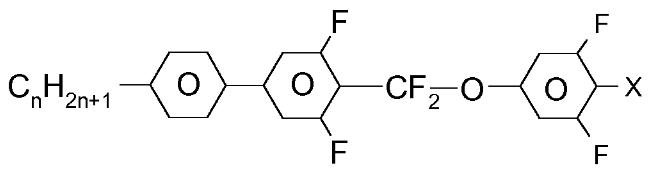

**PUQU-n-X** (X = F, Cl, "OT" = $OCF_3$, "OD" = $OCF_2H$, "T" = $CF_3$)

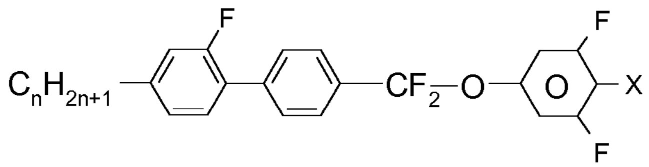

**GPQU-n-X** (X = F, Cl, "OT" = $OCF_3$, "OD" = $OCF_2H$, "T" = $CF_3$)

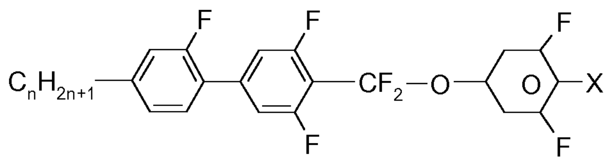

**GUQU-n-X** (X = F, Cl, "OT" = $OCF_3$, "OD" = $OCF_2H$, "T" = $CF_3$)

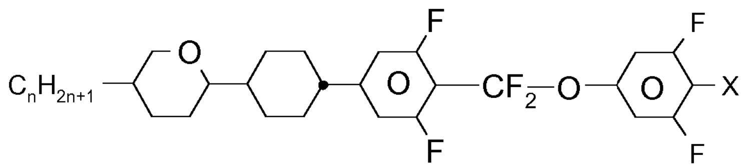

**ACUQU-n-X** (X = F, Cl, "OT" = $OCF_3$, "OD" = $OCF_2H$, "T" = $CF_3$)

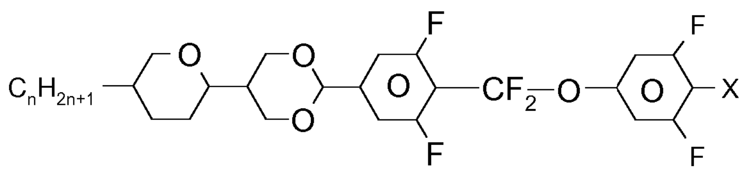

**ADUQU-n-X** (X = F, Cl, "OT" = $OCF_3$, "OD" = $OCF_2H$, "T" = $CF_3$)

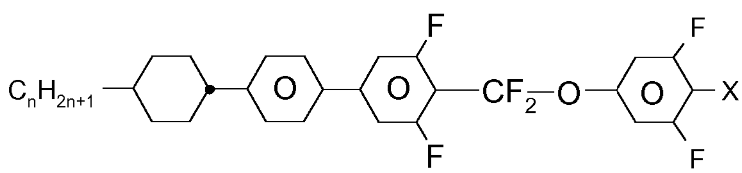

**CPUQU-n-X** (X = F, Cl, "OT" = $OCF_3$, "OD" = $OCF_2H$, "T" = $CF_3$)

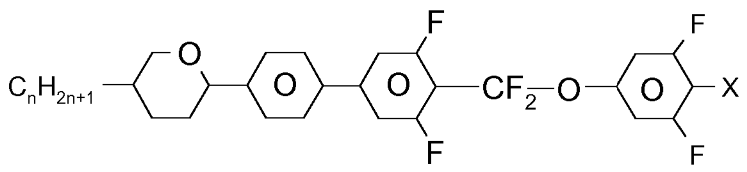

**APUQU-n-X** (X = F, Cl, "OT" = $OCF_3$, "OD" = $OCF_2H$, "T" = $CF_3$)

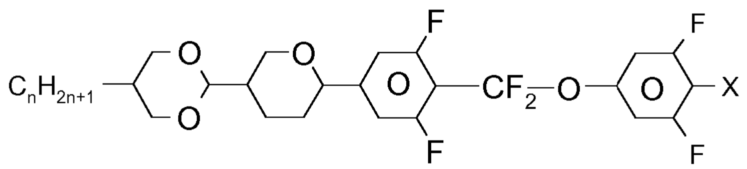

**DAUQU-n-X** (X = F, Cl, "OT" = $OCF_3$, "OD" = $OCF_2H$, "T" = $CF_3$)

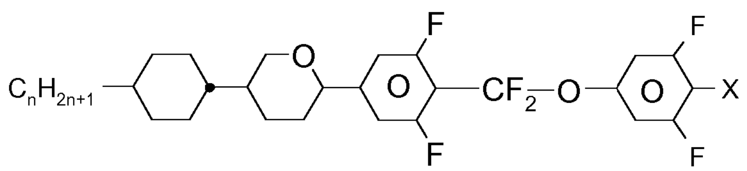

**CAUQU-n-X** (X = F, Cl, "OT" = $OCF_3$, "OD" = $OCF_2H$, "T" = $CF_3$)

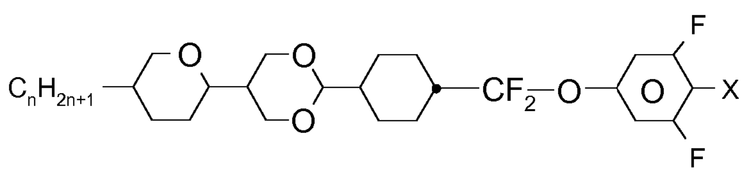

**ADCQU-n-X** (X = F, Cl, "OT" = $OCF_3$, "OD" = $OCF_2H$, "T" = $CF_3$)

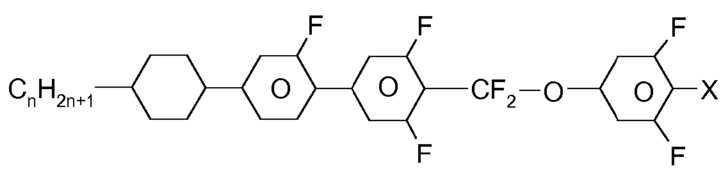

**CGUQU-n-X** (X = F, Cl, "OT" = $OCF_3$, "OD" = $OCF_2H$, "T" = $CF_3$)

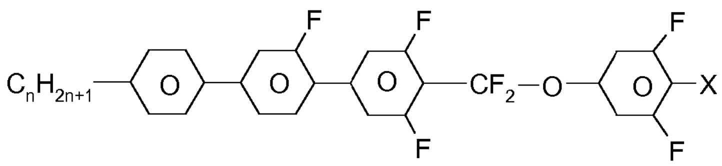

**PGUQU-n-X** (X = F, Cl, “OT“ = $OCF_3$, “OD“ = $OCF_2H$, “T” = $CF_3$)

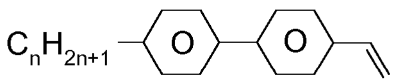

**PP-n-V**

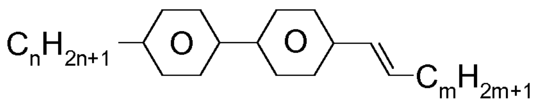

**PP-n-Vm**

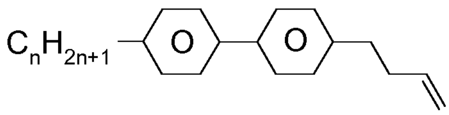

**PP-n-2V**

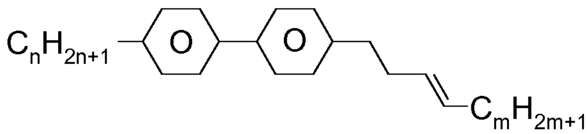

**PP-n-2Vm**

**Table C**

Table C shows possible stabilisers which can be added to the LC media according to the invention.
(n here denotes an integer from 1 to 12, preferably 1, 2, 3, 4, 5, 6, 7 or 8, terminal methyl groups are not shown).

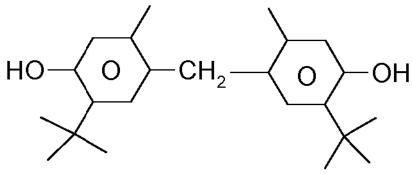

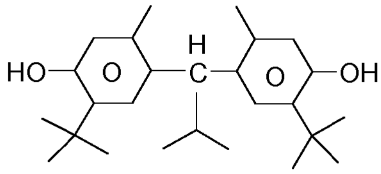

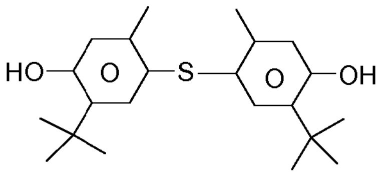

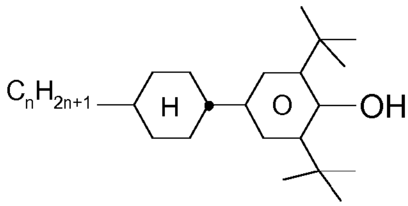

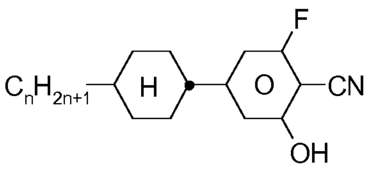

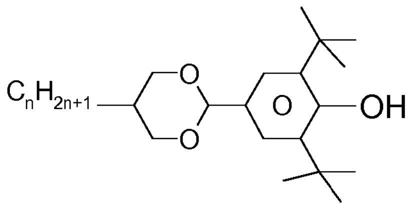

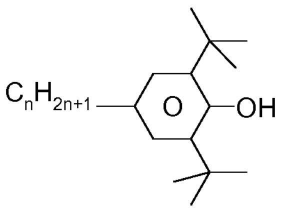

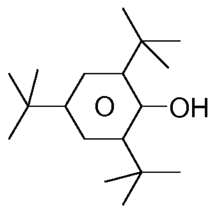

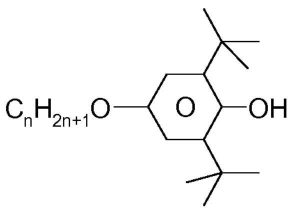

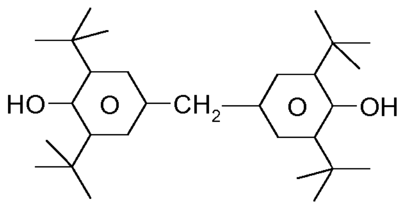

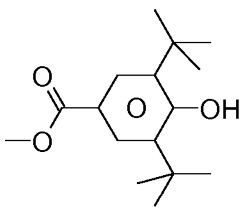

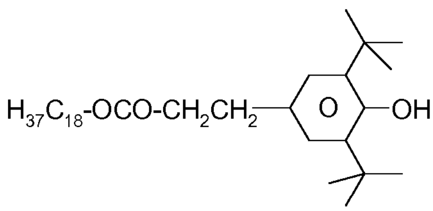

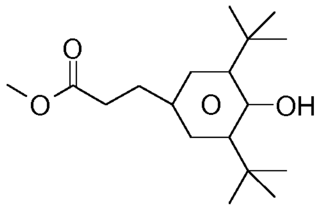

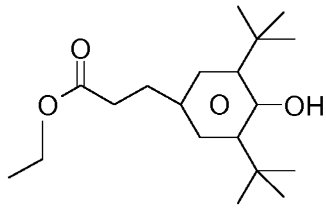

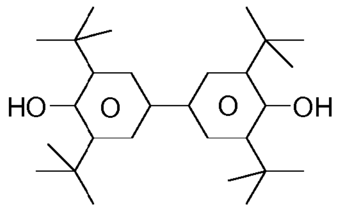

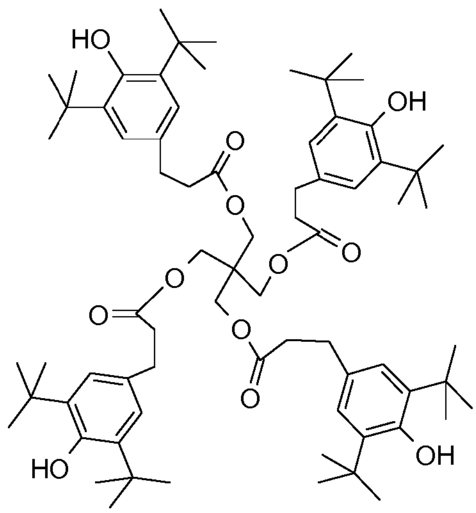

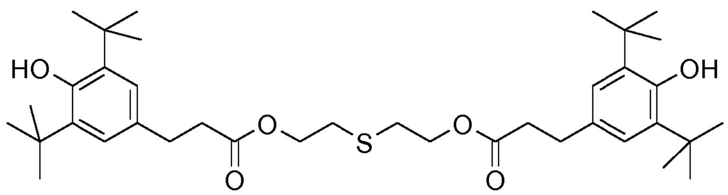

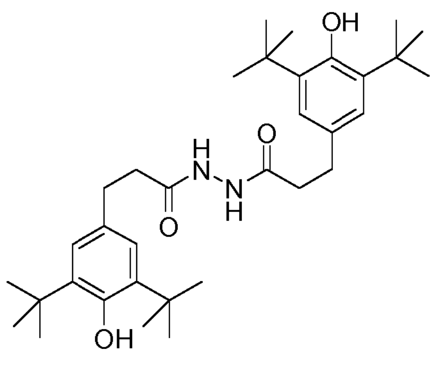

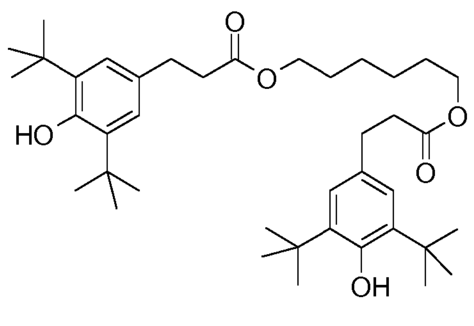

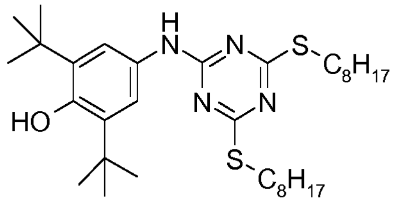

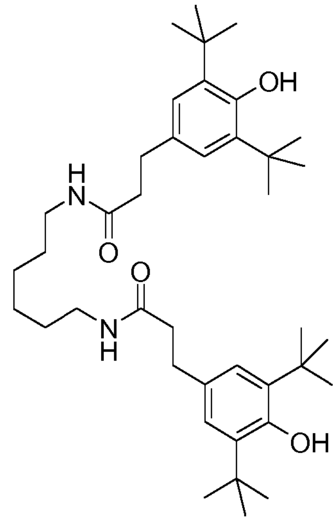

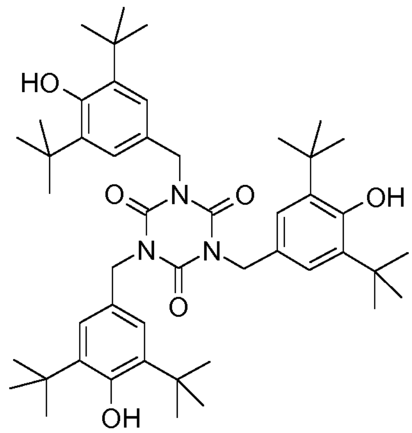

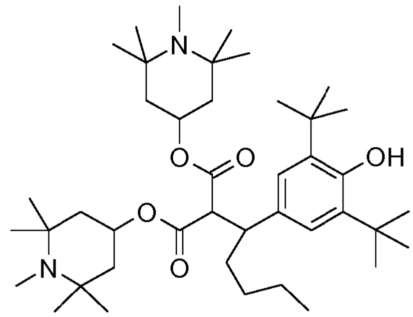

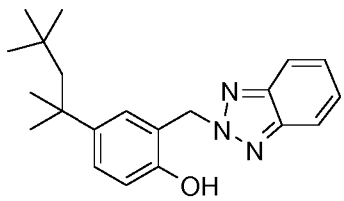

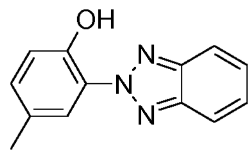

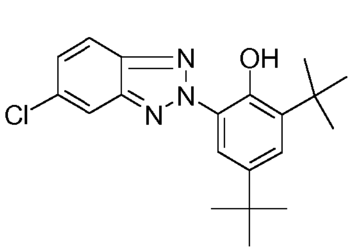

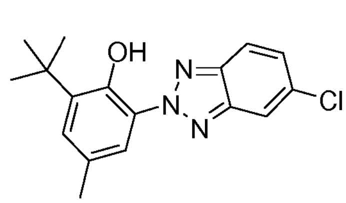

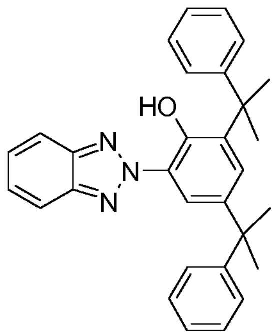

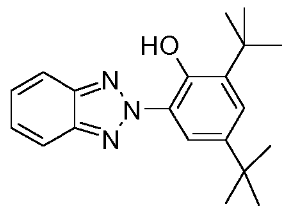

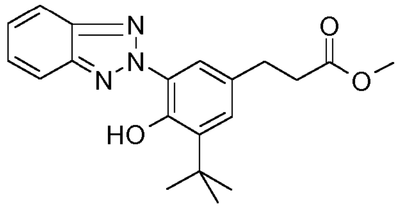

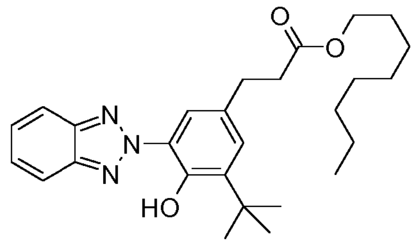

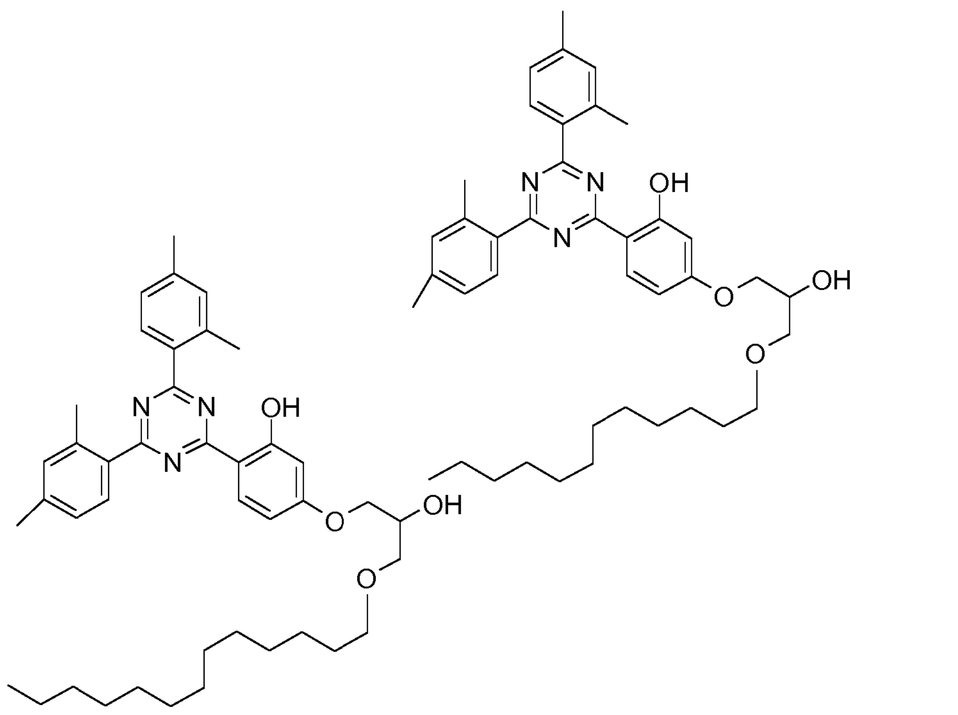

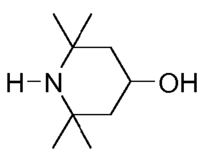
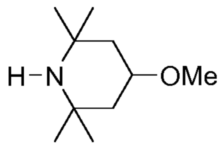
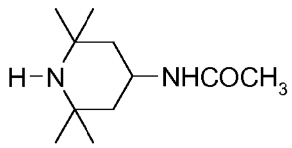

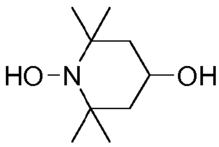
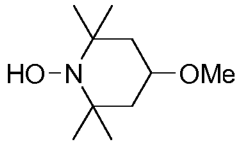
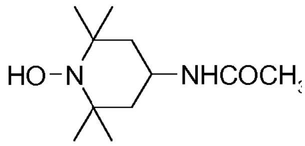

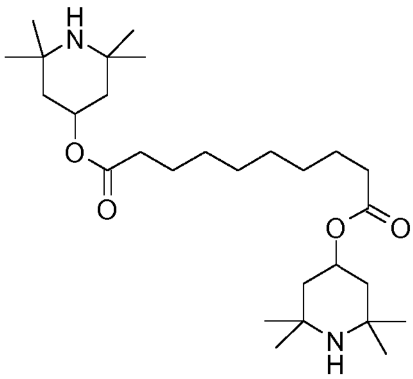
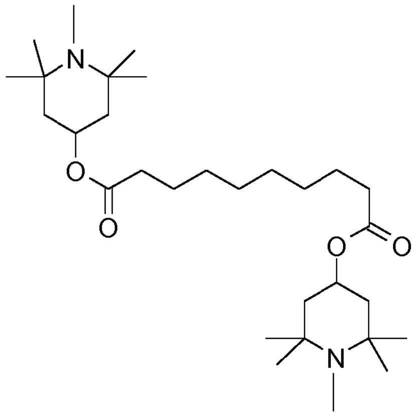

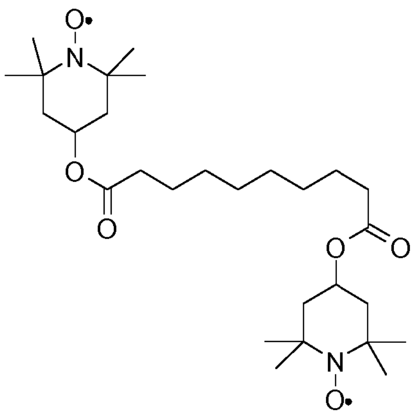
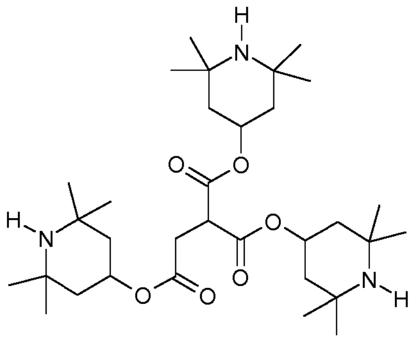

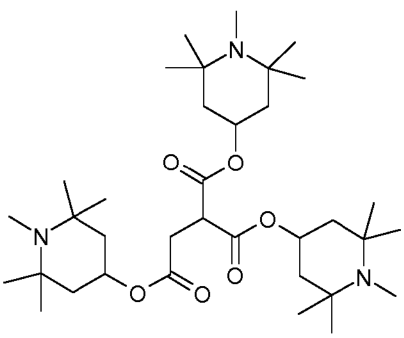
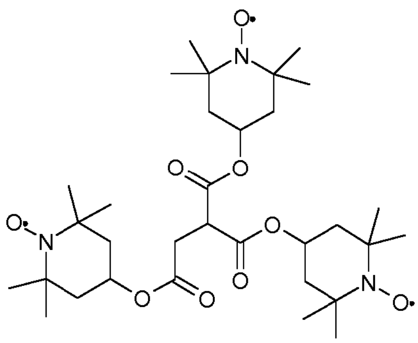

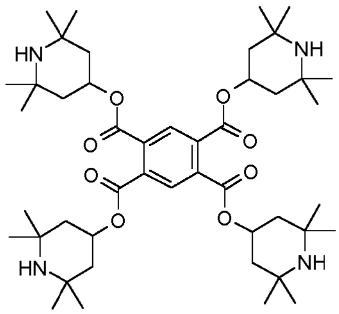

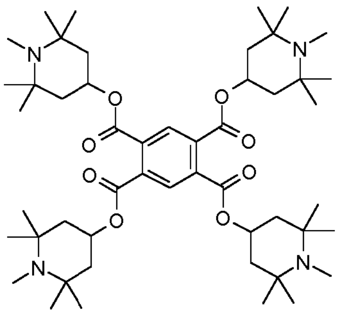

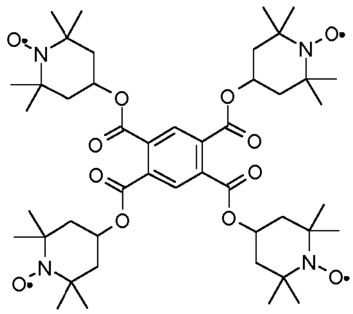

The LC media preferably comprise 0 to 10% by weight, in particular 1 ppm to 5% by weight, particularly preferably 1 ppm to 1% by weight, of stabilisers. The LC media preferably comprise one or more stabilisers selected from the group consisting of compounds from Table C

The liquid crystal media according to the instant invention contain preferably

- seven or more, preferably eight or more compounds, preferably of different formulae, selected from the group of compounds of tables A and B and/or
- one or more, more preferably two or more, preferably three or more compounds, preferably of different formulae, selected from the group of compounds of table A and/or
- three or more, more preferably four or more compounds, more preferably five or more compounds, preferably of different formulae, selected from the group of compounds of table B.

Examples

The examples given in the following are illustrating the present invention without limiting it in any way.

However, the physical properties compositions illustrate to the expert, which properties can be achieved and in which ranges they can be modified. Especially the combination of the various properties, which can be preferably achieved, is thus well defined for the expert.

Mixture Example 1

| | | | |
|---|---|---|---|
| CCH-23 | 18.00 % | $T_{(N,I)}$ [°C]: | 74 |
| PCH-301 | 6.00 % | $\Delta n$ | 0.1107 |
| CG-V-1 | 3.00 % | $n_e$ | 1.5903 |
| PUQU-3-F | 9.00 % | $\Delta\varepsilon$: | 11.7 |
| CCQU-3-F | 15.00 % | $\varepsilon_{\|\|}$: | 15.5 |
| BCH-3F.F.F | 10.00 % | $\gamma_1$ [mPa·s]: | 98 |
| CCP-30CF3 | 8.00 % | | |
| CCP-50CF3 | 7.00 % | $LTS_{cell}$ (-20°C) [h] | ≥840 |
| PGP-2-5 | 6.00 % | | |
| APUQU-3-F | 8.00 % | | |

(continued)

| | | | |
|---|---|---|---|
| PGUQU-3-F | 7.00 % | | |
| CPGU-3-OT | 3.00 % | | |

Mixture Example 2

| | | | |
|---|---|---|---|
| CCH-23 | 18.00 % | $T_{(N,I)}$ [°C]: | 75.5 |
| PCH-301 | 6.00 % | $\Delta n$ | 0.1117 |
| CG-2V-1 | 3.00 % | $n_e$ | 1.5909 |
| PUQU-3-F | 9.00 % | $\Delta\varepsilon$: | 11.9 |
| CCQU-3-F | 15.00 % | $\varepsilon_{\|\|}$: | 15.8 |
| BCH-3F.F.F | 10.00 % | $\gamma_1$ [mPa·s]: | 101 |
| CCP-30CF3 | 8.00 % | | |
| CCP-50CF3 | 7.00 % | $LTS_{cell}$ (-20°C) [h] | ≥528 |
| PGP-2-5 | 6.00 % | | |
| APUQU-3-F | 8.00 % | | |
| PGUQU-3-F | 7.00 % | | |
| CPGU-3-OT | 3.00 % | | |

Mixture Example 3

| | | | |
|---|---|---|---|
| CCH-23 | 18.00 % | $T_{(N,I)}$ [°C]: | 74 |
| PCH-301 | 6.00 % | $\Delta n$ | 0.1107 |
| CG-2V-1 | 3.00 % | $n_e$ | 1.5907 |
| PUQU-3-F | 10.00 % | $\Delta\varepsilon$: | 11.8 |
| CCQU-3-F | 15.00 % | $\varepsilon_{\|\|}$: | 15.7 |
| BCH-3F.F.F | 10.00 % | | |
| CCP-30CF3 | 8.00 % | | |
| CCP-50CF3 | 7.00 % | | |
| PGP-2-5 | 6.00 % | | |
| APUQU-3-F | 7.00 % | | |
| PGUQU-3-F | 7.00 % | | |
| CPGU-3-OT | 3.00 % | | |

Mixture Example 4

| | | | |
|---|---|---|---|
| BCH-32 | 5.00 % | $T_{(N,I)}$ [°C]: | 72.5 |
| PUQU-3-F | 7.50 % | $\Delta n$ | 0.1298 |
| PGP-2-3 | 6.50 % | $n_e$ | 1.6244 |
| PGP-2-4 | 6.50 % | $\Delta\varepsilon$: | 5.8 |
| PGP-2-5 | 8.00 % | $\varepsilon_{\|\|}$: | 9.3 |
| CCQU-2-F | 2.00 % | $\gamma_1$ [mPa·s]: | 83 |
| CCQU-3-F | 3.00 % | | |
| CCQU-5-F | 2.50 % | $LTS_{cell}$ (-20°C) [h] | ≥1000 |
| PCH-301 | 17.50 % | | |
| CG-V-1 | 4.50 % | | |

(continued)

| | |
|---|---|
| CCH-23 | 13.50 % |
| CCH-34 | 7.00 % |
| CPGU-3-OT | 5.50 % |
| CCGU-3-F | 5.50 % |
| PGUQU-3-F | 5.50 % |

Mixture Example 5

| | | | |
|---|---|---|---|
| BCH-32 | 5.00 % | $T_{(N,I)}$ [°C]: | 74.5 |
| PUQU-3-F | 7.50 % | $\Delta n$ | 0.1349 |
| PGP-2-3 | 6.50 % | $n_e$ | 1.6310 |
| PGP-2-4 | 6.50 % | $\Delta\varepsilon$: | 5.7 |
| PGP-2-5 | 8.00 % | $\varepsilon_{\|\|}$: | 9.3 |
| CCQU-2-F | 2.00 % | $\gamma_1$ [mPa·s]: | 87 |
| CCQU-3-F | 3.00 % | | |
| CCQU-5-F | 2.50 % | $LTS_{cell}$ (-20°C) [h] | ≥600 |
| PCH-301 | 17.50 % | | |
| CG-2V-1 | 4.50 % | | |
| CCH-23 | 13.50 % | | |
| CCH-34 | 7.00 % | | |
| CPGU-3-OT | 5.50 % | | |
| CCGU-3-F | 5.50 % | | |
| PGUQU-3-F | 5.50 % | | |

Mixture Examples 1 to 5 have a favourably low value of $\Delta n$, a high value of $\Delta\varepsilon$ and a low rotational viscosity. Thus, they are highly suitable for displays operating in the IPS mode. Furthermore, they have a very good stability of the nematic phase at deep temperatures.

## Claims

1. Liquid crystalline medium, **characterised in that** it comprises

a) one or more compounds of formula I

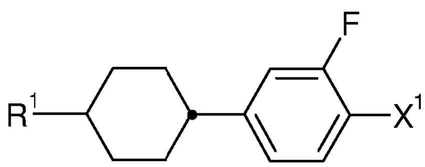

I

wherein

$R^1$ denotes alkenyl having 2 to 7 C atoms,
$X^1$ denotes methyl,

and
b) one or more compounds selected from the group of compounds of the formulae II and III

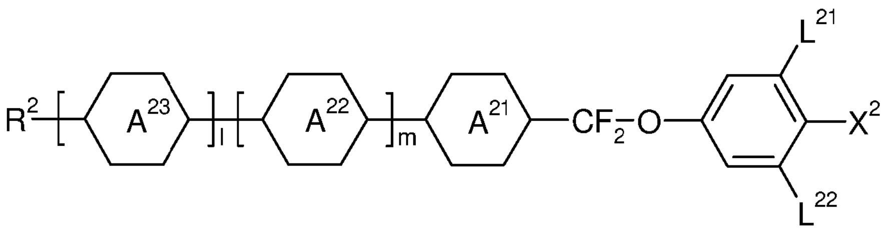 II

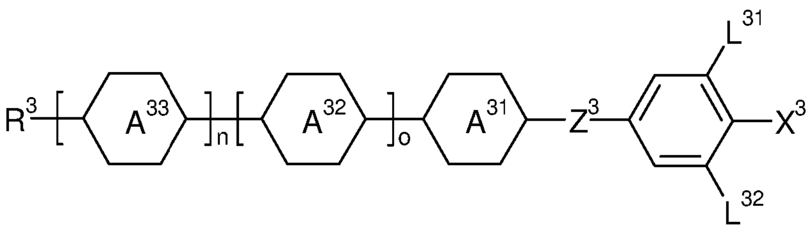 III

wherein

$R^2$ and $R^3$ independently of each other, denote alkyl, alkoxy, fluorinated alkyl or fluorinated alkoxy with 1 to 7 C-atoms, alkenyl, alkenyloxy, alkoxyalkyl or fluorinated alkenyl with 2 to 7 C-atoms,

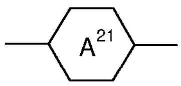 to 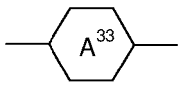

denote, independently of each other,

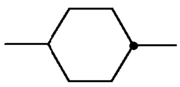, 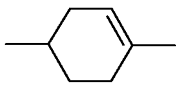, 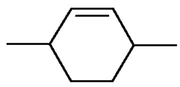,

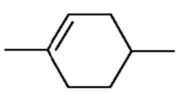, 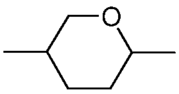, 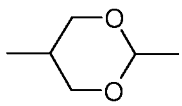,

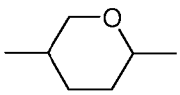, 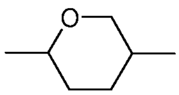, 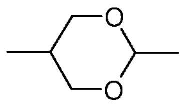,

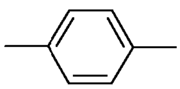, 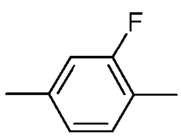, 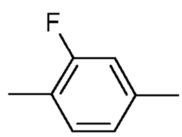,

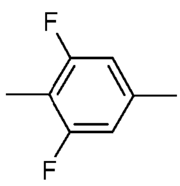, or 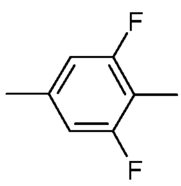,

$L^{21}$, $L^{22}$, $L^{31}$ and $L^{32}$ independently of each other, denote H or F,

$X^2$ and $X^3$ independently of each other, denote halogen, halogenated alkyl or alkoxy with 1 to 3 C-atoms or halogenated alkenyl or alkenyloxy with 2 or 3 C-atoms,

$Z^3$ denotes $-CH_2CH_2-$, $-CF_2CF_2-$, -C(O)O-, *trans*-CH=CH-, *trans*-CF=CF-, $-CH_2O-$ or a single bond,

l, m, n and o are, independently of each other, 0 or 1,

and wherein the compounds of formula I are excluded from the compounds of formula III.

**2.** Liquid crystalline medium according to claim 1, wherein the concentration of the one or more compounds of formula I is in the range of from 1 % to 15 % by weight.

**3.** Liquid crystalline medium according to claim 1 or 2, wherein the medium comprises one or more compounds of the formula IV

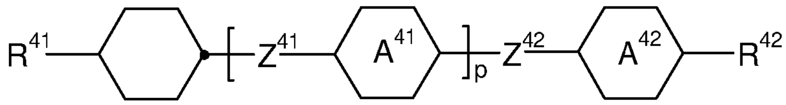

IV

wherein

$R^{41}$ and $R^{42}$ independently of each other have the meaning given for $R^2$ in claim 4,

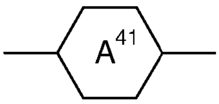

and

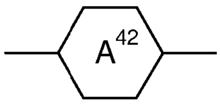

,

independently of each other, and in case

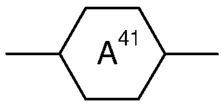

is present twice, also these, independently of each other, denote

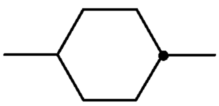

,

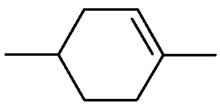

,

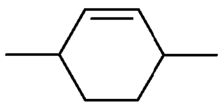

,

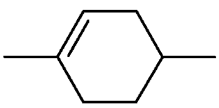

,

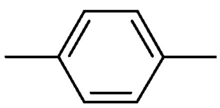

,

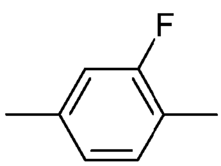

,

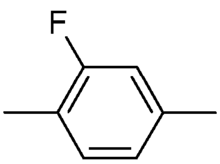

,

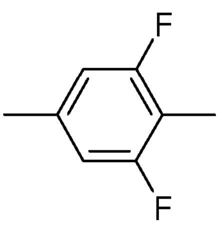

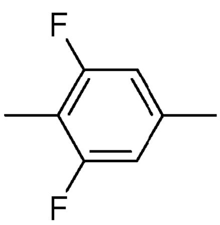

or 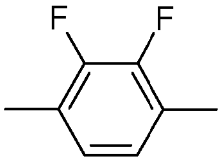

,

$Z^{41}$, $Z^{42}$ independently of each other, and in case $Z^{41}$ is present twice, also these independently of each other, denote $-CH_2CH_2-$, -COO-, *trans*- -CH=CH-, *trans*- -CF=CF-, $-CH_2O-$, $-CF_2O-$, -C≡C- or a single bond, and p is 0, 1 or 2,

and where compounds of formula I are excluded.

**4.** Liquid crystalline medium according to one or more of claims 1 to 3, wherein the medium comprises one or more compounds of the formula VI

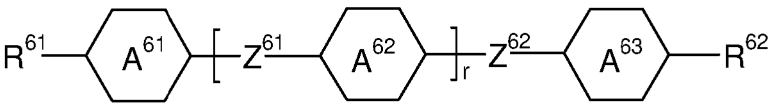 VI

wherein

$R^{61}$ and $R^{62}$ independently of each other have the meaning given for $R^2$ in claim 4,

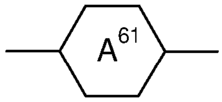

to

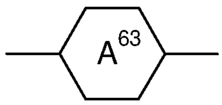

in each occurrence independently of each other, denote

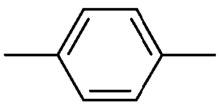 , 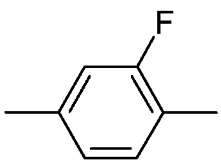 , 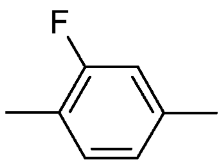

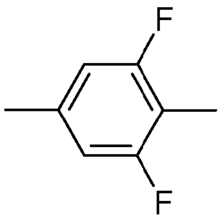 or 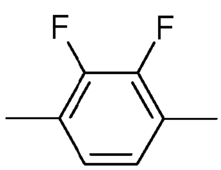 ,

$Z^{61}$ and $Z^{62}$ are, independently of each other, and in case $Z^{61}$ is present twice, also these independently of each other, $-CH_2CH_2-$, -COO-, *trans*- -CH=CH-, *trans*- -CF=CF-, $-CH_2O-$, $-CF_2O-$ or a single bond, and

r is 0, 1 or 2.

5. Process for the preparation of a liquid-crystalline medium according to one or more of claims 1 to 4, **characterised in that** at least one compound of the formula I is mixed with at least one further mesogenic compound, and one or more additives and/or one or more stabilisers are optionally added.

6. Use of a liquid crystal medium according to one or more of claims 1 to 4 in a liquid crystal display.

7. Liquid crystal display, **characterised in that** it comprises a liquid crystal medium according to one or more of claims 1 to 4.

8. Liquid crystal display according to claim 7, **characterised in that** it is addressed by an active matrix.

**Patentansprüche**

1. Flüssigkristallines Medium, **dadurch gekennzeichnet, dass** es

a) eine oder mehrere Verbindungen der Formel I

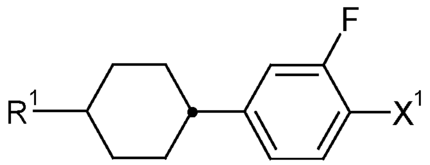

I

bei der

$R^1$ Alkenyl mit 2 bis 7 C-Atomen bedeutet,
$X^1$ Methyl bedeutet,

und
b) eine oder mehrere Verbindungen, die ausgewählt sind aus der Gruppe der Verbindungen der Formeln II und III

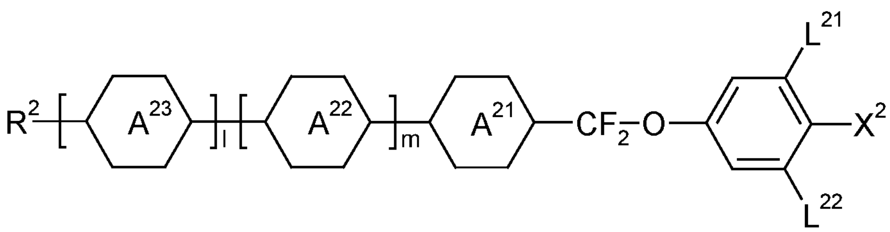

II

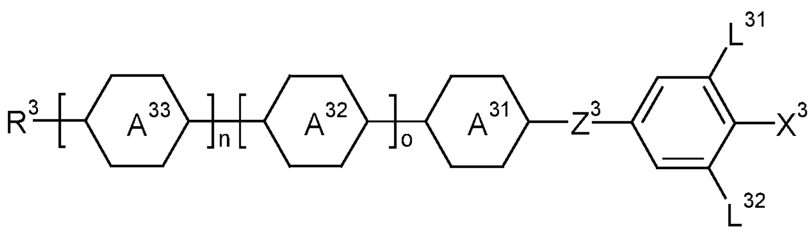

III

bei denen

$R^2$ und $R^3$ unabhängig voneinander Alkyl, Alkoxy, fluoriertes Alkyl oder fluoriertes Alkoxy mit 1 bis 7 C-Atomen, Alkenyl, Alkenyloxy, Alkoxyalkyl oder fluoriertes Alkenyl mit 2 bis 7 C-Atomen bedeuten,

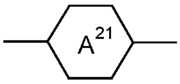 bis 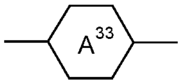

unabhängig voneinander

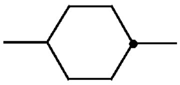, 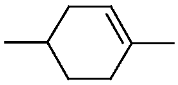, 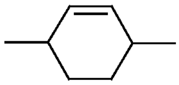,

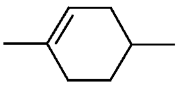, 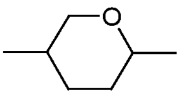, 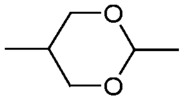,

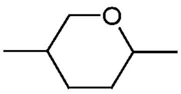, 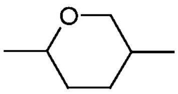, 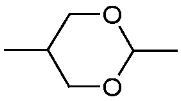,

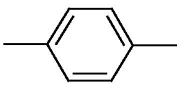, 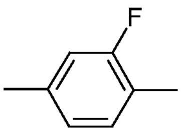, 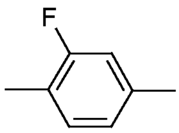,

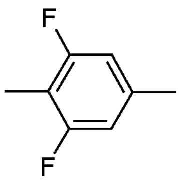 oder 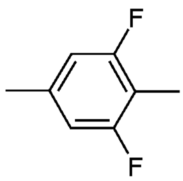

bedeuten,

$L^{21}$, $L^{22}$, $L^{31}$ und $L^{32}$ unabhängig voneinander H oder F bedeuten,

$X^2$ und $X^3$ unabhängig voneinander Halogen, halogeniertes Alkyl oder Alkoxy mit 1 bis 3 C-Atomen oder halogeniertes Alkenyl oder Alkenyloxy mit 2 bis 3 C-Atomen bedeuten,

$Z^3$ $-CH_2CH_2-$, $-CF_2CF_2-$, -C(O)O-, *trans*-CH=CH-, *trans*-CF=CF-, $-CH_2O-$ oder eine Einfachbindung bedeutet,

l, m, n und o unabhängig voneinander 0 oder 1 sind

und bei denen die Verbindungen der Formel I von den Verbindungen der Formel III ausgeschlossen sind, enthält.

**2.** Flüssigkristallines Medium nach Anspruch 1, bei dem die Konzentration der einen oder mehreren Verbindungen der Formel I im Bereich von 1 Gew.-% bis 15 Gew.-% liegt.

**3.** Flüssigkristallines Medium nach Anspruch 1 oder 2, bei dem das Medium eine oder mehrere Verbindungen der Formel IV

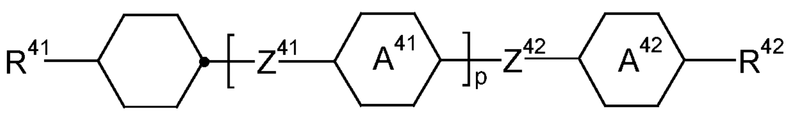 IV

enthält, bei der

$R^{41}$ und $R^{42}$ unabhängig voneinander die für $R^2$ in Anspruch 1 gegebene Bedeutung besitzen,

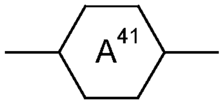

und

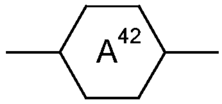

unabhängig voneinander und, wenn

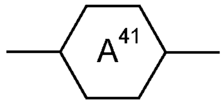

zweimal vorhanden ist, auch diese unabhängig voneinander

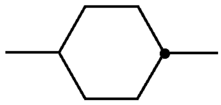
,
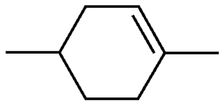
,
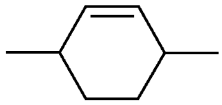
,

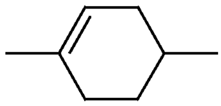
,
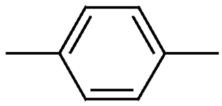
,
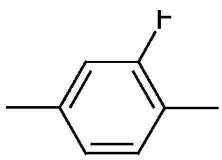
,

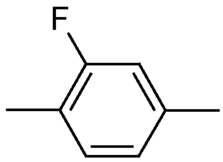
,
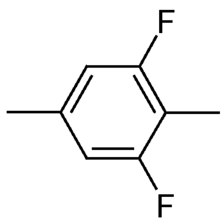

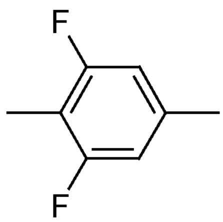

oder

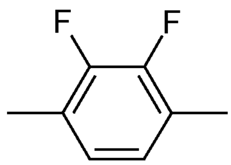

bedeutet,
$Z^{41}$, $Z^{42}$ unabhängig voneinander und, wenn $Z^{41}$ zweimal vorhanden ist, auch diese unabhängig voneinander $-CH_2CH_2-$, -COO-, *trans*- -CH=CH-, *trans*- -CF=CF-, $-CH_2O-$, $-CF_2O-$, -C=C- oder eine Einfachbindung bedeuten und
p 0, 1 oder 2 ist,

und wobei Verbindungen der Formel I ausgeschlossen sind.

**4.** Flüssigkristallines Medium nach einem oder mehreren der Ansprüche 1 bis 3, bei dem das Medium eine oder mehrere Verbindungen der Formel VI

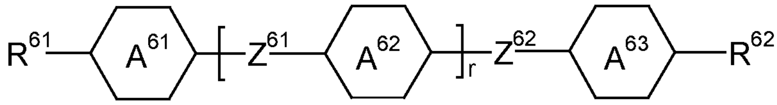

VI

enthält, bei der

$R^{61}$ und $R^{62}$ unabhängig voneinander die für $R^2$ in Anspruch 1 gegebene Bedeutung besitzen,

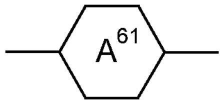

bis

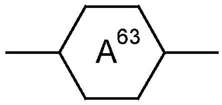

bei jedem Auftreten unabhängig voneinander

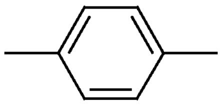

,

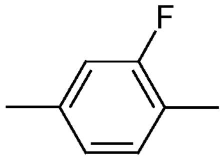

,

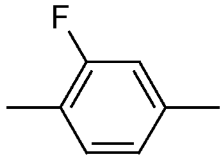

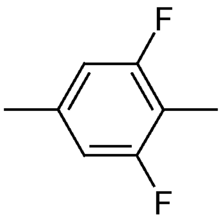

oder

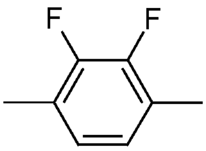

bedeuten,

$Z^{61}$ und $Z^{62}$ unabhängig voneinander und, wenn $Z^{61}$ zweimal vorhanden ist, auch diese unabhängig voneinander $-CH_2CH_2-$, -COO-, *trans*- -CH=CH-, *trans*- -CF=CF-, $-CH_2O-$, $-CF_2O-$ oder eine Einfachbindung sind und

r 0, 1 oder 2 ist.

**5.** Verfahren zur Herstellung eines flüssigkristallinen Mediums nach einem oder mehreren der Ansprüche 1 bis 4, **dadurch gekennzeichnet, dass** man mindestens eine Verbindung der Formel I mit mindestens einer weiteren mesogenen Verbindung mischt und gegebenenfalls einen oder mehrere Zusatzstoffe und/oder einen oder mehrere Stabilisatoren zugibt.

**6.** Verwendung eines Flüssigkristallmediums nach einem oder mehreren der Ansprüche 1 bis 4 in einer Flüssigkristallanzeige.

**7.** Flüssigkristallanzeige, **dadurch gekennzeichnet, dass** sie ein Flüssigkristallmedium nach einem oder mehreren der Ansprüche 1 bis 4 enthält.

**8.** Flüssigkristallanzeige nach Anspruch 7, **dadurch gekennzeichnet, dass** sie durch eine Aktivmatrix adressiert wird.

## Revendications

**1.** Milieu cristallin liquide, **caractérisé en ce qu'**il comprend

a) un ou plusieurs composé(s) de la formule I

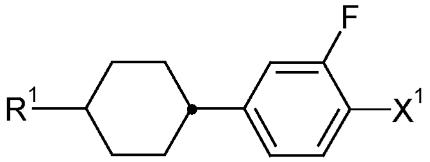

I

dans laquelle

$R^1$ représente alkényle qui comporte de 2 à 7 atomes de C,
$X^1$ représente méthyle,

et
b) un ou plusieurs composé(s) qui est/sont sélectionné(s) parmi le groupe de composés des formules II et III

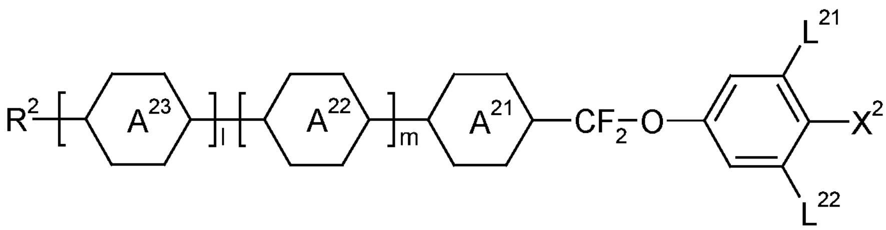

II

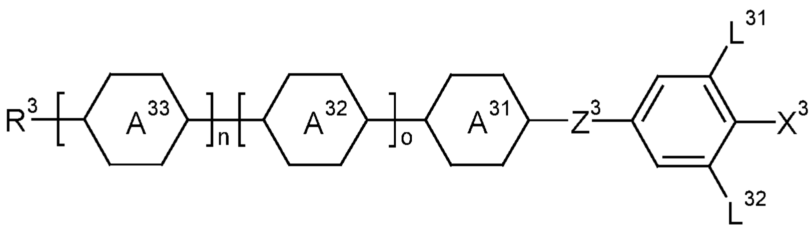

III

dans lesquelles

$R^2$ et $R^3$ représentent, de manière indépendante l'un de l'autre, alkyle, alcoxy, alkyle fluoré ou alcoxy fluoré qui comporte de 1 à 7 atome(s) de C, alkényle, alkényloxy, alcoxyalkyle ou alkényle fluoré qui comporte de 2 à 7 atomes de C,

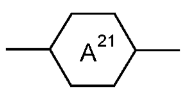

à

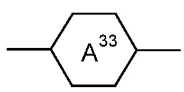

représentent, de manière indépendante les uns des autres,

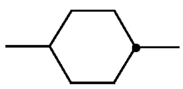

,

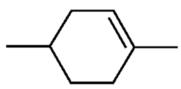

,

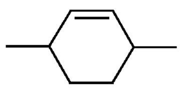

,

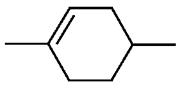, 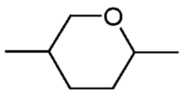, 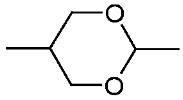,

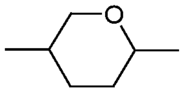, 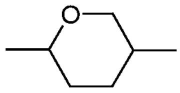, 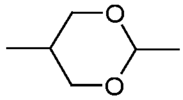,

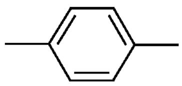, 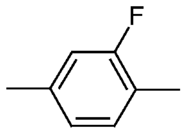, 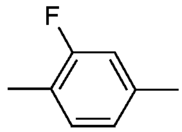,

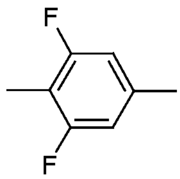, ou 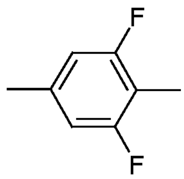,

$L^{21}$, $L^{22}$, $L^{31}$ et $L^{32}$ représentent, de manière indépendante les uns des autres, H ou F,
$X^2$ et $X^3$ représentent, de manière indépendante l'un de l'autre, halogène, alkyle ou alcoxy halogéné qui comporte de 1 à 3 atome(s) de C ou alkényle ou alkényloxy halogéné qui comporte 2 ou 3 atomes de C,
$Z^3$ représente $-CH_2CH_2-$, $-CF_2CF_2-$, -C(O)O-, *trans*-CH=CH-, *trans*-CF=CF-, $-CH_2O-$ ou une liaison simple,
l, m, n et o sont, de manière indépendante les uns des autres, 0 ou 1,

et dans lequel les composés de la formule I sont exclus des composés de la formule III.

**2.** Milieu cristallin liquide selon la revendication 1, dans lequel la concentration des un ou plusieurs composés de la formule I s'inscrit à l'intérieur de la plage qui va de 1 % à 15 % en poids.

**3.** Milieu cristallin liquide selon la revendication 1 ou 2, dans lequel le milieu comprend un ou plusieurs composé(s) de la formule IV

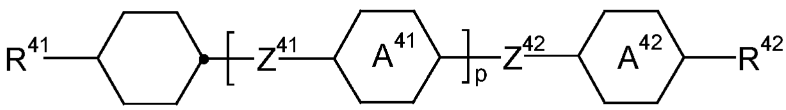 IV

dans laquelle

$R^{41}$ et $R^{42}$ présentent, de manière indépendante l'un de l'autre, la signification qui a été donnée pour $R^2$ selon la revendication 1,

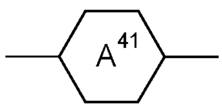 et 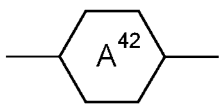,

représentent, de manière indépendante l'un de l'autre, et dans le cas où

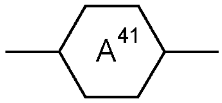

est présent deux fois, ces occurrences représentent également, de manière indépendante l'une de l'autre

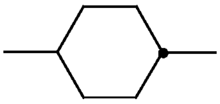 , 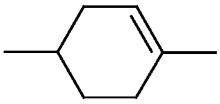 , 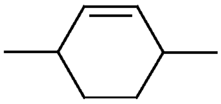 ,

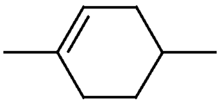 , 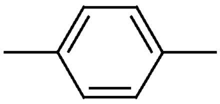 , 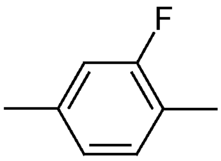 ,

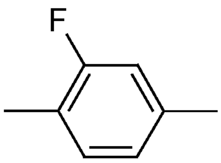 , 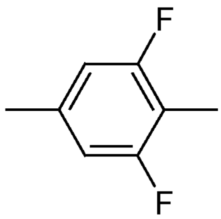 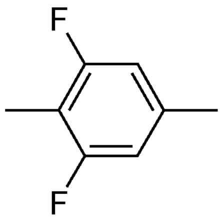

ou 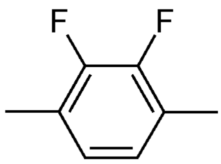 ,

$Z^{41}$, $Z^{42}$ représentent, de manière indépendante l'un de l'autre, et dans le cas où $Z^{41}$ est présent deux fois, ces occurrences représentent également, de manière indépendante l'une de l'autre, $-CH_2CH_2-$, -COO-, *trans*-CH=CH-, *trans*-CF=CF-, $-CH_2O-$, $-CF_2O-$, -C≡C- ou une liaison simple, et
p est 0, 1 ou 2,

et où les composés de la formule I sont exclus.

**4.** Milieu cristallin liquide selon une ou plusieurs des revendications 1 à 3, dans lequel le milieu comprend un ou plusieurs composé(s) de la formule VI

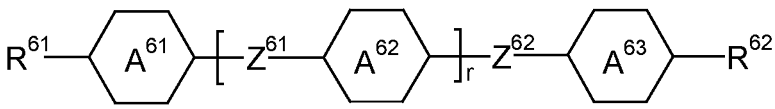 VI

dans laquelle

$R^{61}$ et $R^{62}$ présentent, de manière indépendante l'un de l'autre, la signification qui a été donnée pour $R^2$ selon la revendication 1,

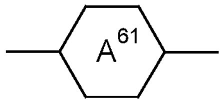

à

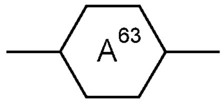

représentent pour chaque occurrence, de manière indépendante les uns des autres,

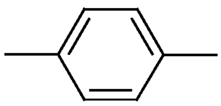

,

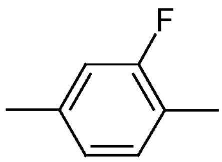

,

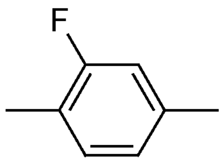

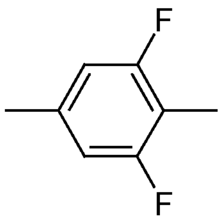

ou

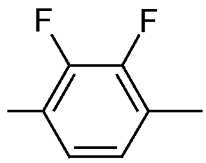

,

$Z^{61}$ et $Z^{62}$ sont, de manière indépendante l'un de l'autre, et dans le cas où $Z^{61}$ est présent deux fois, ces occurrences représentent également, de manière indépendante l'une de l'autre, $-CH_2CH_2-$, -COO-, *trans*- -CH=CH-, *trans*- -CF=CF-, $-CH_2O-$, $-CF_2O-$ ou une liaison simple, et
r est 0, 1 ou 2.

5. Procédé pour la préparation d'un milieu cristallin liquide selon une ou plusieurs des revendications 1 à 4, **caractérisé en ce qu'**au moins un composé de la formule I est mélangé avec au moins un autre composé mésogène, et un ou plusieurs additif(s) et/ou un ou plusieurs stabiliseur(s) sont en option ajoutés.

6. Utilisation d'un milieu cristallin liquide selon une ou plusieurs des revendications 1 à 4 dans un affichage à cristaux liquides.

7. Affichage à cristaux liquides, **caractérisé en ce qu'**il comprend un milieu cristallin liquide selon une ou plusieurs des revendications 1 à 4.

8. Affichage à cristaux liquides selon la revendication 7, **caractérisé en ce qu'**il est adressé au moyen d'une matrice active.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- DE 4000451
- EP 0588568 A
- WO 9105029 A
- JP 7181439 A
- EP 0667555 A
- EP 0673986 A
- DE 19509410
- DE 19528106
- DE 19528107
- WO 9623851 A
- WO 9628521 A
- US 7306831 B1
- CN 104152153 B


### Non-patent literature cited in the description


- **S.H. JUNG et al.** *Jpn. J. Appl. Phys.,* 2004, vol. 43 (3), 1028
- Merck Liquid Crystals, Physical Properties of Liquid Crystals. Merck KGaA, 1997